(19) Europäisches Patentamt
European Patent Office
Office européen des brevets

(11) EP 3 838 985 A1

(12) EUROPEAN PATENT APPLICATION

(43) Date of publication:
**23.06.2021 Bulletin 2021/25**

(51) Int Cl.:
***C08L 23/12*** *(2006.01)*

(21) Application number: **19218380.4**

(22) Date of filing: **20.12.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(71) Applicant: **Total Research & Technology Feluy**
**7181 Seneffe (BE)**

(72) Inventors:
- **ROUSSEAUX, Dimitri**
  **1400 NIVELLES (BE)**
- **LHOST, Olivier**
  **7021 HAVRE (BE)**

(74) Representative: **Garcia Martin, Margarita**
**Total Research & Technology Feluy**
**Patent Department**
**Zone Industrielle Feluy C**
**7181 Seneffe (BE)**

# (54) CONDUCTIVE COMPOSITE MATERIAL AND THERMOFORMED SHEET THEREOF

(57) The present disclosure relates to a composite material comprising
- from 6 wt.% to 40 wt.% of a polypropylene resin A, being a polypropylene homopolymer;
- from 30 wt.% to 70 wt.% of a polypropylene resin B, being a polypropylene copolymer; and
- from 0.1 to 4.2 wt.% of carbon particles selected from nanographene, carbon nanotubes or any combination thereof;

wherein the melt flow index of polypropylene resin A is at most 2.0 g/10 min as measured according to the method of standard ISO 1133, and the ratio of the melt flow index of polypropylene resin B to the melt flow index of polypropylene resin A is at least 4. The present disclosure also relates to a thermoformable sheet and article produced from said composite material.

EP 3 838 985 A1

## Description

### TECHNICAL FIELD

The present disclosure relates to a process for the preparation of polypropylene-based conductive articles and to the articles obtained and obtainable by said process.

### BACKGROUND

Polystyrene is often used to prepare containers using a thermoforming process called "Form, Fill, and Seal" (FFS), whereby the forming of the containers, the filling with a product, and the sealing of the container with a lid are all performed on the same line. Polystyrene has the advantage that it is flexible enough so that it can be easily thermoformed into cups or containers. At the same time, it maintains a certain rigidity, which allows multiple cups to be formed attached to one another, whereby the multiple cups can be easily separated into individual cups by cracking the polystyrene.

However, the polystyrene price is susceptible to irregular market fluctuations, such that the total cost of the containers cannot easily be predicted.

Polypropylene, however, is of great interest because it offers in mechanical and chemical properties in combination with good economics. Thermoforming companies, as well as polymer producers, have therefore undertaken major research and development efforts to render polypropylene more suitable for use in thermoforming.

There still remains a need in the industry for polypropylenes with improved processability in thermoforming, preferably without sacrificing other properties, such as for example processability in the melt-extrusion step or mechanical properties of the final thermoformed articles. There also remains a need in the industry for polypropylenes that allow an increase in output and productivity of a thermoforming unit.

Another advantage of using polypropylene is its easy processing in different transformation techniques and a mix of good mechanical properties in the temperature range - 20°C to 100°C.

When conductive articles are required, the polypropylene can be then blended with carbon particles, such as carbon nanotubes (CNT), to form a composite material. The production of such composite material is described for example in WO2016/142544.

Several methods can be used when producing such conductive articles, such as extrusion, compression moulding or injection moulding. CNTs are affected by shear during these production processes. There is no shear when the compression-moulding method is used. Some shear may appear when using an extrusion method. However, injection moulding implies high shear. The higher the shear, the higher the content of CNT is required to arrive at similar electrical properties.

In case the amount of CNT added to the composite material in order to arrive at an acceptable electrical resistivity value in the final product is too high, the use of such a composite material is not economically viable. There is, therefore, a need to provide a composite material for the production of articles by extrusion having good electrical properties together with a content of carbon particles, such as CNT, being as low as possible; such properties being sought for in spite of the existence of a certain degree of shear during processing.

Furthermore, sheet extrusion of a polypropylene product comprising an amount of CNT greater than 4.5 wt.% of the total weight of the final composition leads to a product that is both too expensive and too brittle.

As a result, there is also a need to provide composite material for the production of articles by thermoforming of extruded sheets, wherein the articles have good electrical properties together with a content of CNT being as low as possible.

It is, therefore, an object of the present disclosure to provide a composite material that is suited for thermoforming. It is another object of the disclosure to provide a composite material with improved processability in thermoforming. It is also an object of the disclosure to provide a composite material with good electrical properties and improved processability in thermoforming. It is also an object of the disclosure to provide a composite material with good electrical and mechanical properties and improved processability in thermoforming.

### SUMMARY

The present disclosure provides the solution to one or more of the aforementioned needs. Preferred embodiments of the disclosure provide the solution to one or more of the aforementioned needs.

In this respect and according to a first aspect, an object of the disclosure is a composite material remarkable in that it comprises:

- from 6 wt.% to 40 wt.% of a polypropylene resin A, based on the total weight of the composite material; wherein the polypropylene resin A is a polypropylene homopolymer or a polypropylene copolymer;

- from 30 wt.% to 70 wt.% of a polypropylene resin B, based on the total weight of the composite material; wherein the polypropylene resin B is a polypropylene homopolymer or a polypropylene copolymer; and
- from 0.1 to 4.2 wt.% of carbon particles, based on the total weight of the composition and as determined according to ISO 11358, wherein the carbon particles are selected from nanographene, carbon nanotubes or any combination thereof;

in that the melt flow index of polypropylene resin A is at most 2.0 g/10 min as measured according to the method of standard ISO 1133, condition M, at 230°C and under a load of 2.16 kg; and in that the ratio of the melt flow index of polypropylene resin B to the melt flow index of polypropylene resin A is at least 4.

Surprisingly, it has been found by the inventors that it is possible to achieve a thermoformed end-product having good electrical and mechanical properties with a low content of carbon particles by using a composition comprising a blend of two polypropylenes A and B wherein polypropylene resin A has a melt flow index of at most 2.0 g/10 min (ISO 1133, 230 °C, 2.16 kg) with the melt flow index of polypropylene resin B being higher than the melt flow index of polypropylene resin A so that there is a ratio of at least 4 between them. As a consequence, it is possible to use fewer carbon particles, and in particular fewer carbon nanotubes, in order to obtain compositions with increased electrical properties as compared to composite materials known in the prior art for thermoforming applications.

For example, the composite material comprises:

- from 9 wt.% to 35 wt.% of a polypropylene resin A, based on the total weight of the composite material; wherein the polypropylene resin A is a polypropylene homopolymer or a polypropylene copolymer; and

- from 39 wt.% to 65 wt.% of a polypropylene resin B, based on the total weight of the composite material; wherein the polypropylene resin B is a polypropylene homopolymer or a polypropylene copolymer.

<u>One or more of the following can be used to better define the disclosed composite material:</u>

For example, the ratio of the melt flow index of polypropylene resin B to the melt flow index of polypropylene resin A is at least 5; for example, at least 5.5; for example, at least 10; for example, at least 15; for example, at least 20; for example, at least 50; or for example, at least 80.

For example, the ratio of the melt flow index of polypropylene resin B to the melt flow index of polypropylene resin A is at most 400; for example, at most 300; for example, at most 200; for example, at most 180; for example, at most 150; and for example, at most 140.

For example, the ratio of the melt flow index of polypropylene resin B to the melt flow index of polypropylene resin A is ranging from 4 to 400; for example, from 5 to 150; for example, from 5.5 to 140.

For example, the melt flow index of the composite material is ranging from 1.0 g/10 min to 20.0 g/10 min as measured according to the method of standard ISO 1133, condition M, at 230 °C and under a load of 2.16 kg; for example, from 1.5 g/10 min to 15.0 g/10 min; for example, from 2.0 g/10 min to 10.0 g/10 min; and for example, from 2.5 g/10 min to 8.0 g/10 min.

For example, the melt flow index of the composite material is at least 1.0 g/10 min as measured according to the method of standard ISO 1133, condition M, at 230 °C and under a load of 2.16 kg; for example, at least 1.5 g/10 min; for example, at least 2.0 g/10 min; for example, at least 2.5 g/10 min; for example, at least 3.0 g/10 min.

For example, the melt flow index of the composite material is at most 20.0 g/10 min as measured according to the method of standard ISO 1133, condition M, at 230 °C and under a load of 2.16 kg; for example, at most 15.0 g/10 min; for example, at most 10.0 g/10 min; for example, at most 8.0 g/10 min; for example, at most 6.0 g/10 min.

For example, the polypropylene resin A and the polypropylene resin B have different melting points wherein the difference between the melting point of polypropylene resin A and the melting point of polypropylene resin B is at least 3.0 °C with the melting points being measured according to ISO 3146; for example, at least 5.0 °C; for example, at least 7.0 °C; for example, at least 10.0 °C.

For example, the polypropylene resin A and the polypropylene resin B have different melting points wherein the melting point of polypropylene resin A is higher than the melting point of polypropylene resin B.

For example, the polypropylene resin A and the polypropylene resin B have different melting points wherein the melting point of polypropylene resin A is higher than the melting point of polypropylene resin B and the melting point of polypropylene resin B is at most 155°C.

For example, the melting point of polypropylene resin A is at least 160 °C as measured according to ISO 3146; and/or the melting point of polypropylene resin B is at most 155°C as measured according to ISO 3146.

For example, the polypropylene resin A is produced with a catalyst different from the catalyst used for the production of polypropylene resin B. For example, polypropylene resin A is Ziegler-Natta catalyzed, and polypropylene resin B is metallocene-catalyzed.

For example, both polypropylene resins A and B are produced with the same catalyst. For example, both polypropylene resins A and B are Ziegler-Natta catalyzed. For example, both polypropylene resins A and B are metallocene-catalyzed.

For example, the polypropylene resin A is a polypropylene homopolymer and the polypropylene resin B is a polypropylene copolymer.

For example, the polypropylene resin A is a polypropylene copolymer and the polypropylene resin B is a polypropylene copolymer wherein the content of comonomer in polypropylene resin B higher than the content of comonomer in polypropylene resin A.

For example, the polypropylene resin A is a polypropylene homopolymer and the polypropylene resin B is a polypropylene copolymer.

<u>One or more of the following can be used to better define the carbon particles used in the disclosed composite material:</u>

The carbon particles are or comprise carbon nanotubes; preferably, the carbon particles comprise at least 50 wt.% of carbon nanotubes based on the total weight of the carbon particles; more preferably, the carbon particles comprise at least 80 wt.% of carbon nanotubes based on the total weight of the carbon particles; and even more preferably, all the carbon particles are carbon nanotubes.

The carbon particles are or comprise carbon nanotubes, and the composite material is remarkable in that it comprises from 1.0 to 4.2 wt.% of carbon nanotubes based on the total weight of the composition as determined according to ISO 11358; preferably from 1.3 to 4.1 wt.%; more preferably, from 2.1 to 4.0 wt.%.

The carbon particles are or comprise carbon nanotubes, and the composite material is remarkable in that it comprises at least 0.1 wt.% of carbon nanotubes based on the total weight of the composition as determined according to ISO 11358; for example, at least 0.5 wt.% of carbon nanotubes; for example, at least 0.8 wt.% of carbon nanotubes; for example, at least 1.0 wt.% of carbon nanotubes; for example, at least 1.3 wt.% of carbon nanotubes; for example, at least 1.5 wt.% of carbon nanotubes; for example, at least 2.1 wt.% of carbon nanotubes; for example, at least 2.5 wt.% of carbon nanotubes.

The carbon particles are or comprise carbon nanotubes, and the composite material is remarkable in that it comprises at most 5.0 wt.% of carbon nanotubes based on the total weight of the composition as determined according to ISO 11358; for example, at most 4.8 wt.% of carbon nanotubes; for example, at most 4.5 wt.% of carbon nanotubes; for example, at most 4.2 wt.% of carbon nanotubes; for example, at most 4.1 wt.% of carbon nanotubes; for example, at most 4.0 wt.% of carbon nanotubes; for example, at most 3.9 wt.% of carbon nanotubes; for example, at most 3.6 wt.% of carbon nanotubes.

For example, the carbon particles are provided in a form of a masterbatch comprising the blend of at least 5.0 wt.% of carbon particles as determined according to ISO 11358 and based on the total weight of said masterbatch; wherein the carbon particles are selected from nanographene, carbon nanotubes or any combination thereof; and a polypropylene resin C having an MI2 ranging from 100 to 260 g/10 min as determined according to ISO 1133 at 230 °C under a load of 2.16 kg.

For example, the masterbatch is present in a content ranging from 10 to 45 wt.% based on the total weight of the composite material.

For example, the polypropylene resin C is selected from an isotactic polypropylene resin and a syndiotactic polypropylene resin; with preference, the polypropylene resin C is an isotactic polypropylene resin.

For example, the polypropylene resin C is selected from a virgin polypropylene resin, a polypropylene post-consumer resin, and a blend of a virgin polypropylene resin and a polypropylene post-consumer resin.

For example, the polypropylene resin C comprises from 20 to 95 wt.% of polypropylene post-consumer resin based on the total weight of the second crystalline polypropylene resin.

For example, the polypropylene resin C is or comprises a post-consumer resin; and further wherein the polypropylene post-consumer resin has an MI2 ranging from 100 to 260 g/10 min as determined according to ISO 1133 at 230 °C under a load of 2.16 kg.

For example, the polypropylene resin C is or comprises a post-consumer resin; and further wherein the polypropylene post-consumer resin is a blend of recycled polypropylene and recycled polyethylene, wherein the content of the recycled polyethylene is ranging from 5 to 15 wt.% relative to the total weight of the polypropylene post-consumer resin.

For example, the polypropylene resin C is selected from a propylene homopolymer and/or a copolymer of propylene with one or more comonomer selected from ethylene and $C_4$-$C_{10}$ alpha-olefins; with preference, the polypropylene resin C is a propylene homopolymer.

For example, the polypropylene resin C is a metallocene-catalyzed polypropylene and has a molecular weight distribution ranging from 2.0 to 4.5.

For example, the polypropylene resin C has a melt index MI2 ranging from 105 to 250 g/10 min as determined according to ISO 1133 at 230 °C under a load of 2.16 kg; preferably, from 110 to 200 g/10 min; more preferably from

115 to 180 g/10 min; and most preferably, from 120 to 160 g/10 min.

One or more of the following can be used to better define the polypropylene resin A used in the disclosed composite material:

For example, the polypropylene resin A is a homopolymer and comprises propylene monomers and at most 0.2 wt.% of one or more comonomers based on the total weight of the polypropylene resin A; with preference, one or more comonomers are selected from ethylene and $C_4$-$C_8$ alpha-olefins. More preferably, the polypropylene resin A comprises at most 0.1 wt.% of one or more comonomers based on the total weight of the polypropylene resin A; with preference, one or more comonomers are selected from ethylene and $C_4$-$C_8$ alpha-olefins.

For example, the polypropylene resin A is a polypropylene copolymer comprising propylene monomers and at least 1.0 wt.% of one or more comonomers based on the total weight of the polypropylene resin A; with preference, the polypropylene resin A is a random polypropylene copolymer and/or one or more comonomers are selected from ethylene and $C_4$-$C_8$ alpha-olefins. For example, the melt flow index of polypropylene resin A is at most 1.8 g/10 min as measured according to the method of standard ISO 1133, condition M, at 230 °C and under a load of 2.16 kg.

For example, the melt flow index of polypropylene resin A is at least 0.05 g/10 min as measured according to the method of standard ISO 1133, condition M, at 230 °C and under a load of 2.16 kg; preferably, at least 0.10 g/10 min; more preferably, at least 0.15 g/10 min; and even more preferably, at least 0.20 g/10 min.

For example, the polypropylene resin A is metallocene-catalyzed or Ziegler-Natta catalyzed. For example, the melting point of polypropylene resin A is at least 140 °C as measured according to ISO 3146; for example, at least 150 °C; for example, at least 155°C; for example, at least 158 °C; for example, at least 160 °C; and for example, at least 162 °C.

For example, the polypropylene resin A is or comprises a post-consumer resin; wherein the polypropylene post-consumer resin is a blend of recycled polypropylene and recycled polyethylene, wherein the content of the recycled polyethylene is ranging from 5 to 15 wt.% relative to the total weight of the polypropylene post-consumer resin.

One or more of the following can be used to better define the polypropylene resin B used in the disclosed composite material:

For example, the polypropylene resin B is a homopolymer and comprises propylene monomers and at most 0.2 wt.% of one or more comonomers based on the total weight of the polypropylene resin B; with preference, one or more comonomers are selected from ethylene and $C_4$-$C_8$ alpha-olefins. More preferably, the polypropylene resin B comprises at most 0.1 wt.% of one or more comonomers based on the total weight of the polypropylene resin A; with preference, one or more comonomers are selected from ethylene and $C_4$-$C_8$ alpha-olefins.

For example, the polypropylene resin B is a polypropylene copolymer comprising propylene monomers and at least 1.0 wt.% of one or more comonomers based on the total weight of the polypropylene resin B; with preference, the polypropylene resin B is a random polypropylene copolymer and/or one or more comonomers are selected from ethylene and $C_4$-$C_8$ alpha-olefins. For example, the melt flow index of polypropylene resin B is at least 8 g/10 min as measured according to the method of standard ISO 1133, condition M, at 230 °C and under a load of 2.16 kg; preferably, at least 10 g/10 min.

For example, the melt flow index of polypropylene resin B is at most 200 g/10 min as measured according to the method of standard ISO 1133, condition M, at 230°C and under a load of 2.16 kg; preferably, at most 150 g/10 min; more preferably, at most 120 g/10 min; even more preferably, at most 100 g/10 min; most preferably, at most 80 g/10 min; and even most preferably, at most 50 g/10 min.

For example, polypropylene resin B is Ziegler-Natta catalyzed or metallocene-catalyzed.

For example, the melting point of polypropylene resin B is at least 140 °C as measured according to ISO 3146; for example, at least 150 °C; for example, at least 155 °C; for example, at least 158 °C; for example, at least 160 °C; and for example, at least 162 °C.

For example, the polypropylene resin B is or comprises a post-consumer resin; wherein the polypropylene post-consumer resin is a blend of recycled polypropylene and recycled polyethylene, wherein the content of the recycled polyethylene is ranging from 5 to 15 wt.% relative to the total weight of the polypropylene post-consumer resin.

According to a second aspect, an object of the disclosure is a process for preparing a composite material according to the first aspect, comprising the steps of:

i) providing from 0.1 to 4.2 wt.% carbon particles, wherein the carbon particles are selected from nanographene, carbon nanotubes or any combination thereof;

ii) providing from 6 wt.% to 40 wt.% of a polypropylene resin A; wherein the polypropylene resin A is a polypropylene homopolymer or a polypropylene copolymer; wherein the melt flow index of polypropylene resin A is at most 2.0

g/10 min as measured according to the method of standard ISO 1133, condition M, at 230 °C and under a load of 2.16 kg;

iii) providing from 30 wt.% to 70 wt.% a polypropylene resin B, wherein the polypropylene resin B is a polypropylene homopolymer or a polypropylene copolymer; wherein the ratio of the melt flow index of polypropylene resin B to the melt flow index of polypropylene resin A is at least 4; and

iv) melt blending the components to form a composite material;

with preference, the carbon particles are provided in the form of a masterbatch comprising a blend of:

- at least 5.0 wt.% of carbon particles as determined according to ISO 11358 and based on the total weight of said masterbatch; wherein the carbon particles are selected from nanographene, carbon nanotubes or any combination thereof; and

- a polypropylene resin C having an MI2 ranging from 100 to 260 g/10 min as determined according to ISO 1133 at 230 °C under a load of 2.16 kg.

For example, at least 80 wt.% of the carbon particles are carbon nanotubes having an average length of 1.2 μm or more as determined by transmission electron microscopy before being blended with a polypropylene resin; for example, all the carbon particles are carbon nanotubes having an average length of 1.2 μm or more. The length of the carbon nanotubes is determined before the said carbon nanotubes are blended with a polypropylene resin; for example, before the carbon nanotubes are blended with a polypropylene resin C to form a masterbatch, or before the carbon nanotubes are blended with polypropylene resin A and B when no masterbatch is used.

According to a third aspect, an object of the disclosure is an article comprising the composite material according to the first aspect; with preference, the article is a thermoformable article or a thermoformed article.

In an embodiment, the article has a surface resistance of at most $5.10^6$ Ohm; preferably, of at most $1.10^6$ Ohm as measured according to IEC 61340-4-1 with an SRM110 meter.

According to a fourth aspect, an object of the disclosure is a process for preparing an article according to the third aspect, comprising the steps of:

a) providing a composite material according to the first aspect; and/or as prepared according to the second aspect;

b) forming a sheet with the composite material obtained in step a);

c) thermoforming the sheet formed in step b) into an article according to the third aspect.

The present disclosure will now be further described. In the following passages, different aspects of the disclosure are defined in more details. Each aspect so defined may be combined with any other aspect or aspects unless clearly indicated to the contrary. In particular, any feature or statement indicated as being preferred or advantageous may be combined with any other feature or statements indicated as being preferred or advantageous.

## DETAILED DESCRIPTION

When describing the polymers, articles, and processes of the disclosure, the terms used are to be construed in accordance with the following definitions, unless a context dictates otherwise.

As used herein, the term "catalyst" refers to a substance that causes a change in the rate of a polymerization reaction. In the present disclosure, it is especially applicable to catalysts suitable for the polymerization of propylene to polypropylene.

As used herein, a "polymer" is a polymeric compound prepared by polymerizing monomers, whether of the same or of a different type. The generic term polymer thus embraces the term homopolymer, usually employed to refer to polymers prepared from only one type of monomer, and the terms copolymer and interpolymer as defined below.

As used herein, a "copolymer", "interpolymer" and like terms mean a polymer prepared by the polymerization of at least two different types of monomers. These generic terms include polymers prepared from two or more different types of monomers, e.g. terpolymers, tetrapolymers, etc.

As used herein, "blend", "polymer blend" and like terms refer to a composition of two or more compounds, for example, two or more polymers or one polymer with at least one other compound.

As used herein, the term "melt blending" involves the use of shear force, extensional force, compressive force,

ultrasonic energy, electromagnetic energy, thermal energy or combinations comprising at least one of the foregoing forces or forms of energy and is conducted in processing equipment wherein the aforementioned forces are exerted by a single screw, multiple screws, intermeshing co-rotating or counter-rotating screws, non-intermeshing co-rotating or counter-rotating screws, reciprocating screws, screws with pins, barrels with pins, rolls, rams, helical rotors, or combinations comprising at least one of the foregoing.

As used herein, the terms "polypropylene" (PP) and "propylene polymer" may be used synonymously. The term "polypropylene" encompasses polypropylene homopolymer resin, as well as copolymers of propylene which can be derived from propylene and a comonomer such as one or more selected from the group consisting of $C_2$ or $C_4$-$C_{20}$ alpha-olefins, such as ethylene, 1-butene, 1-pentene, 1-hexene, 1-octene.

The term "polypropylene resin" as used herein refers to polypropylene fluff or powder that is extruded, and/or melted and/or pelletized and can be produced through compounding and homogenizing of the polypropylene resin as taught herein, for instance, with mixing and/or extruder equipment. As used herein, the term "polypropylene" may be used as a shorthand for "polypropylene resin".

The term "fluff" or "powder" as used herein refers to polypropylene material with the hard catalyst particle at the core of each grain and is defined as the polymer material after it exits the polymerization reactor (or the final polymerization reactor in the case of multiple reactors connected in series).

Under normal production conditions in a plant, it is expected that the melt index (MI2, HLMI, MI5) will be different for the fluff than for the polypropylene resin. Under normal production conditions in a plant, it is expected that the density will be slightly different for the fluff, than for the polypropylene resin. Unless otherwise indicated, density and melt index for the polypropylene resin refer to the density and melt index as measured on the polypropylene resin as defined above. The density of the polypropylene resin refers to the polymer density as such, not including additives such as for example pigments unless otherwise stated.

As used herein the terms "composite material" are related to the blend of one or more polymers with carbon particles. In the present application, carbon nanotubes may be referred to as CNT.

The term "carbon particles" as used herein encompasses carbon nanotubes and nanographene but excludes carbon fibres.

The terms "comprising", "comprises" and "comprised of" as used herein are synonymous with "including", "includes" or "containing", "contains", and are inclusive or open-ended and do not exclude additional, non-recited members, elements or method steps. The terms "comprising", "comprises" and "comprised of" also include the term "consisting of".

The recitation of numerical ranges by endpoints includes all integer numbers and, where appropriate, fractions subsumed within that range (e.g. 1 to 5 can include 1, 2, 3, 4 when referring to, for example, a number of elements, and can also include 1.5, 2, 2.75 and 3.80, when referring to, for example, measurements). The recitation of endpoints also includes the recited endpoint values themselves (e.g. from 1.0 to 5.0 includes both 1.0 and 5.0). Any numerical range recited herein is intended to include all sub-ranges subsumed therein.

As used herein, the term "masterbatch" refers to concentrates of active material (such as the carbon nanotubes) in a polymer, which is intended to be subsequently incorporated into another polymer miscible with the polymer already contained in the masterbatches.

The terms "virgin polypropylene" are used to denote a polypropylene directly obtained from a polymerization plant. The terms "directly obtained" is meant to include that the polypropylene may optionally be passed through a pelletization step or an additivation step or both.

The terms "Post Consumer Resin", which may be abbreviated as "PCR", is used to denote a component of waste.

Throughout the present application the terms "polypropylene" and "propylene polymer" may be used synonymously.

Throughout the present application the terms "forming" and "shaping" may be used synonymously.

## The composite material

An object of the present disclosure is a composite material comprising at least two polypropylene resins A and B blended with carbon particles. According to the disclosure, the composite material is remarkable in that it comprises:

- from 6 wt.% to 40 wt.% of a polypropylene resin A, based on the total weight of the composite material; wherein the polypropylene resin A is a polypropylene homopolymer or a polypropylene copolymer;
- from 30 wt.% to 70 wt.% of a polypropylene resin B, based on the total weight of the composite material; wherein the polypropylene resin B is a polypropylene homopolymer or a polypropylene copolymer; and
- from 0.1 to 4.2 wt.% of carbon particles, based on the total weight of the composition and as determined according to ISO 11358, wherein the carbon particles are selected from nanographene, carbon nanotubes or any combination thereof;

in that the melt flow index of polypropylene resin A is at most 2.0 g/10 min as measured according to the method of standard ISO 1133, condition M, at 230°C and under a load of 2.16 kg; and in that the ratio of the melt flow index of polypropylene resin B to the melt flow index of polypropylene resin A is at least 4.

For example, the composite material is remarkable in that it comprises:

- from 9 wt.% to 35 wt.% of a polypropylene resin A, based on the total weight of the composite material; wherein the polypropylene resin A is a polypropylene homopolymer;
- from 39 wt.% to 65 wt.% of a polypropylene resin B, based on the total weight of the composite material; wherein the polypropylene resin B is a polypropylene copolymer; and
- from 0.1 to 4.2 wt.% of carbon particles, based on the total weight of the composition and as determined according to ISO 11358, wherein the carbon particles are selected from nanographene, carbon nanotubes or any combination thereof;

in that the melt flow index of polypropylene resin A is at most 2.0 g/10 min as measured according to the method of standard ISO 1133, condition M, at 230 °C and under a load of 2.16 kg; and in that the ratio of the melt flow index of polypropylene resin B to the melt flow index of polypropylene resin A is at least 4.

For example, the composite material comprises at least 8 wt.% of a polypropylene resin A, based on the total weight of the composite material; preferably, at least 9 wt.%; more preferably, at least 10 wt.%; even more preferably, at least 11 wt.%; and most preferably, at least 12 wt.%.

For example, the composite material comprises at most 39 wt.% of a polypropylene resin A, based on the total weight of the composite material; preferably, at most 35 wt.%; more preferably, at most 30 wt.%; even more preferably, at most 25 wt.%; and most preferably, at most 23 wt.%.

For example, the composite material comprises at least 32 wt.% of a polypropylene resin B, based on the total weight of the composite material; preferably, at least 35 wt.%; more preferably, at least 39 wt.%; even more preferably, at least 40 wt.%; and most preferably, at least 42 wt.%.

For example, the composite material comprises at most 68 wt.% of a polypropylene resin B, based on the total weight of the composite material; preferably, at most 65 wt.%; more preferably, at most 63 wt.%; even more preferably, at most 62 wt.%; and most preferably, at most 60 wt.%.

The composite can be produced in separate reactors wherein each polypropylene resin A and B is produced in one or more reactor and then blended together. Polypropylene resin A can be produced in a single polymerization reactor, or in double or in multiple polymerization reactors. Polypropylene resin B can be separately produced in a single, double, or multiple polymerization reactors, and then both polypropylenes can be blended together. For example, one of the polypropylene resin A or B is blended with the carbon particles prior to being blended to the other polypropylene.

Alternatively, the composite material can be produced in at least two sequential polymerization reactors, operating under different conditions, wherein a first polypropylene is produced in the first reactor, and a second polypropylene is produced in the second reactor in the presence of the first polypropylene, and wherein the hydrogen concentration in at least one of the polymerization reactors is controlled such as to produce therein the propylene polymer with the lowest melt flow index as defined above, so as to produce the composite material of the disclosure. The person skilled in the art will have the advantage to have the first polypropylene being polypropylene resin A (i.e. the propylene homopolymer resin), and the second polypropylene being polypropylene resin B (i.e. the propylene copolymer resin).

The disclosure relates to a composite material comprising a blend of a propylene homopolymer (i.e. polypropylene resin A) and a polypropylene copolymer (i.e. polypropylene resin B), wherein the polypropylene resins A and B are selected in order to have the melt flow index of the polypropylene resin B being higher than the one of the polypropylene resin A. For example, the ratio of the melt flow index of polypropylene resin B to the melt flow index of polypropylene resin A is at least 5; preferably, at least 5.5; preferably, at least 10; more preferably, at least 15; even more preferably, at least 20; most preferably, at least 50; and even most preferably, at least 80 or at least 100 or at least 120.

For example, the ratio of the melt flow index of polypropylene resin B to the melt flow index of polypropylene resin A is at most 4000, preferably at most 400; more preferably, at most 300; even more preferably, at most 200; most preferably, at most 180; even most preferably, at most 150; or; at most 140. As used herein, the term "ratio of X to Y" refers to the value of X divided by Y, whereby X and Y are expressed in the same units of measurement.

For example, the ratio of the melt flow index of polypropylene resin B to the melt flow index of polypropylene resin A is ranging from 4 to 400; for example, from 5 to 150; for example, from 5.5 to 140.

With preference, the respective content of the polypropylene resins A and B and their respective melt flow index are selected in order to have the melt flow index of the composite material ranging from 1.0 g/10 min to 20.0 g/10 min as measured according to the method of standard ISO 1133, condition M, at 230°C and under a load of 2.16 kg; preferably, from 1.5 g/10 min to 15.0 g/10 min, preferably, from 2.0 g/10 min to 10.0 g/10 min, and more preferably, from 2.5 g/10 min to 8.0 g/10 min. For example, the melt flow index of the composite material is at least 1.0 g/10 min as measured according to the method of standard ISO 1133, condition M, at 230 °C and under a load of 2.16 kg; preferably, at least

1.5 g/10 min; more preferably, at least 2.0 g/10 min; even more preferably, at least 2.5 g/10 min; most preferably, at least 3.0 g/10 min.

In a complementary or alternative manner, the melt flow index of the composite material is at most 20.0 g/10 min as measured according to the method of standard ISO 1133, condition M, at 230 °C and under a load of 2.16 kg; preferably, at most 15.0 g/10 min; more preferably, at most 12.0 g/10 min; even more preferably, at most 10.0 g/10 min; most preferably, at most 8.0 g/10 min; even more preferably, at most 6.0 g/10 min.

In a preferred embodiment of the disclosure, the polypropylene resins A and B are selected to show a difference between their respective melting point, so that the melting point of the polypropylene resin A is higher than the melting point of the polypropylene resin B. For example, the difference between the melting point of polypropylene resin A and the melting point of polypropylene resin B is at least 3.0 °C with the melting points being measured according to ISO 3146; preferably, at least 5.0 °C; and more preferably, at least 7.0 °C; even more preferably, at least 9.0 °C; most preferably, at least 10.0 °C; even most preferably, at least 11.0 °C, or at least 12.0 °C, or at least 13.0 °C, or at least 14.0 °C, or at least 15.0 °C.

The polypropylene resin A and B

Each of the polypropylene resin A and polypropylene resin B is selected from a homopolymer and a propylene copolymer.

For example, the polypropylene resin A and/or the polypropylene resin B is a propylene homopolymer.

In such a case, the polypropylene resin A and/or the polypropylene resin B comprises propylene monomers and at most 0.2 wt.% of one or more comonomers based on the total weight of the polypropylene resin; with preference, one or more comonomers are selected from ethylene and C4-C8 alpha-olefins.

For example, the polypropylene resin A and/or the polypropylene resin B comprises at most 0.2 wt.% of comonomer; preferably, at most 0.1 wt.% of comonomer; preferably, at most 0.05 wt.% of comonomer; more preferably, at most 0.0 wt.2% of comonomer; and even more preferably, at most 0.01 wt.% of comonomer. The comonomer content herein is measured by $^{13}C$ NMR. In some preferred embodiments, polypropylene resin A comprises at most 0.2 wt.% of ethylene; preferably, at most 0.1 wt.% of ethylene; more preferably, at most 0.05 wt.% of ethylene; even more preferably, at most 0.02 wt.% of ethylene; and most preferably, at most 0.01 wt.% of ethylene. The ethylene content herein is measured by $^{13}C$ NMR.

For example, the polypropylene resin A and/or the polypropylene resin B is a propylene copolymer, wherein each of them can be independently selected from a random propylene copolymer and an heterophasic polypropylene resin.

For example, the polypropylene resin A and/or the polypropylene resin B is a polypropylene copolymer comprising propylene monomers and at least 1.0 wt.% of one or more comonomers based on the total weight of the polypropylene resin; with preference, the polypropylene resin A and/or the polypropylene resin B is a random polypropylene copolymer and/or one or more comonomers are selected from ethylene and $C_4$-$C_8$ alpha-olefins. The one or more comonomers are preferably selected from the group consisting of ethylene and $C_4$-$C_{10}$ alpha-olefins, such as for example 1-butene, 1-pentene, 1-hexene, 1-octene, or 4-methyl-1-pentene. Ethylene and 1-butene are the preferred comonomers. Ethylene is the most preferred comonomer.

In some embodiments, the polypropylene random copolymer A and/or the polypropylene random copolymer B comprises up to 8.0 wt.% of one or more comonomers; preferably, up to 5.0 wt.% of one or more comonomers; and more preferably, up to 4.0 wt.% of one or more comonomers. It is preferred that it comprises at least 1.0 wt.% of one or more comonomers. For the purposes of the present disclosure, the comonomer content of the random copolymer is given relative to the total weight of the random copolymer. Preferably, the one or more comonomer is ethylene. The comonomer content can be measured by $^{13}C$ NMR. The ethylene content can be measured by $^{13}C$ NMR.

Polypropylene resin A and/or B can be produced by polymerizing propylene and one or more comonomers, such as ethylene, in the presence of a catalyst system and optionally in the presence of hydrogen.

For example, the polypropylene resin A and/or the polypropylene resin B is a heterophasic propylene copolymer resin. The heterophasic propylene copolymers comprise a matrix propylene polymer phase and a dispersed phase of a rubber. With preference, the rubber is ethylenepropylene rubber (EPR).

The heterophasic propylene copolymers of the present disclosure as defined above can be produced by sequential polymerization in a series of polymerization reactors in presence of a catalyst system, wherein in a first polymerization stage the propylene polymer is produced, and in a second polymerization stage the rubber is produced by copolymerizing ethylene and at least one further olefin different from ethylene. The catalyst system is added to the first polymerization stage.

Thus, for example, the polypropylene resin A and/or the polypropylene resin B is an heterophasic polypropylene resin consisting of:

i. from 60 to 95 wt.% based on the total weight of the heterophasic polypropylene resin of a polypropylene-based matrix selected from a homopolymer and/or a copolymer of propylene with one or more comonomer selected from ethylene and $C_4$-$C_{10}$ alpha-olefins; and

ii. from 40 to 5 wt.% based on the total weight of the heterophasic polypropylene resin of a dispersed ethylene-alpha-olefin copolymer;

with preference, the alpha-olefin in the ethylene-alpha-olefin copolymer is selected from the group of alpha-olefins having from 3 to 8 carbon atoms and/or the alpha-olefin in the ethylene-alpha-olefin copolymer is in the range of 25 to 70 wt.% based on the total weight of the ethylene-alpha-olefin copolymer.

The polypropylene resin A and the polypropylene resin B can be produced by any catalyst. For example, the polypropylene resin A can be produced by a Ziegler-Natta catalyst or a metallocene catalyst. For example, the polypropylene resin B can be produced by a Ziegler-Natta catalyst or a metallocene catalyst. The polypropylene resin A and the polypropylene resin B can be produced by the same catalyst or by different catalysts. For example, the polypropylene resin A and the polypropylene resin B are both produced by a Ziegler-Natta catalyst or by a metallocene catalyst.

The polypropylene resin A and the polypropylene resin B can be produced by different catalysts. For example, polypropylene resin A is Ziegler-Natta catalyzed, and polypropylene resin B is metallocene-catalyzed. For example, polypropylene resin B is Ziegler-Natta catalyzed, and polypropylene resin A is metallocene-catalyzed.

The Ziegler-Natta catalyst systems may comprise a titanium compound having at least one titanium-halogen bond and an internal electron donor, both on a suitable support (for example on a magnesium halide in active form), an organoaluminium compound (such as an aluminium trialkyl), and an optional external electron donor (such as a silane or a diether compound).

The internal electron donor can be selected from the group consisting of diether compounds, succinate compounds, phthalate compounds, di-ketone compounds, enamino-imine compounds and any blend of these. A mixture of internal electron donors can, for example, comprise a succinate and a phthalate or a succinate and a diether. Diether compounds are most preferred as internal electron donors. Ziegler-Natta catalysts comprising a diether, a succinate, a phthalate, a di-ketone or an enamino-imine as internal donor can, for example, be obtained by reaction of an anhydrous magnesium halide with an alcohol, followed by titanation with a titanium halide and reaction with the respective diether, succinate, phthalate, di-ketone or enamino-imine compound as internal electron donor.

Suitable diethers are 1,3-diethers of formula: $R^1R^2C(CH_2OR^3)(CH_2OR^4)$, wherein $R^1$ and $R^2$ are the same or different and are $C_1$-$C_{18}$ alkyl, $C_3$-$C_{18}$ cycloalkyl or $C_6$-$C_{18}$ aryl; $R^3$ and $R^4$ are the same or different and are $C_1$-$C_4$ alkyl radicals; or are the 1,3-diethers in which the carbon atom in position 2 belongs to a cyclic or polycyclic structure made up of 5, 6 or 7 carbon atoms and containing two or three unsaturations. Representative examples of said diethers are 2-methyl-2-isopropyl-1,3-dimethoxypropane; 2,2-diisobutyl-1,3-dimethoxypropane; 2-isopropyl-2-cyclopentyl-1,3-dimethoxypropane; 2-isopropyl-2-isoamyl-1,3-dimethoxypropane; 9,9-bis(methoxymethyl)fluorene.

Suitable succinate compounds have the formula

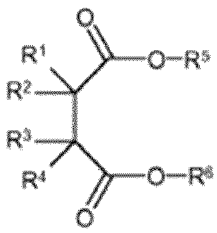

wherein $R^1$ to $R^4$ are equal to or different from one another and are hydrogen, or a $C_1$-$C_{20}$ linear or branched alkyl, $C_2$-$C_{20}$alkenyl, $C_3$-$C_{20}$ cycloalkyl, $C_6$-$C_{20}$aryl, $C_6$-$C_{20}$aryl$C_1$-$C_{20}$alkyl or $C_1$-$C_{20}$alkyl$C_6$-$C_{20}$aryl group, optionally containing heteroatoms, and $R^1$ to $R^4$, being joined to the same carbon atom, can be linked together to form a cycle; and $R^5$ and $R^6$ are equal to or different from one another and are a linear or branched $C_1$-$C_{20}$ linear or branched alkyl, $C_2$-$C_{20}$alkenyl, $C_3$-$C_{20}$ cycloalkyl, $C_6$-$C_{20}$aryl, $C_6$-$C_{20}$aryl$C_1$-$C_{20}$alkyl or $C_1$-$C_{20}$alkyl$C_6$-$C_{20}$aryl group, optionally containing heteroatoms.

Suitable phthalates are selected from the alkyl, cycloalkyl and aryl phthalates, such as for example diethyl phthalate, diisobutyl phthalate, di-n-butyl phthalate, dioctyl phthalate, diphenyl phthalate and benzylbutyl phthalate.

Suitable di-ketones are 1,3-di-ketones of formula

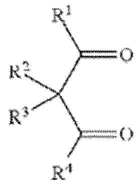

wherein $R^2$ and $R^3$ are equal to or different from one another and are hydrogen, or a $C_1$-$C_{20}$ linear or branched alkyl, $C_2$-$C_{20}$alkenyl, $C_3$-$C_{20}$ cycloalkyl, $C_6$-$C_{20}$aryl, $C_6$-$C_{20}$aryl$C_1$-$C_{20}$alkyl or $C_1$-$C_{20}$alkyl$C_6$-$C_{20}$aryl group, optionally containing heteroatoms, and $R^2$ and $R^3$, being joined to the same carbon atom, can be linked together to form a cycle; and $R^1$ and $R^4$ are equal to or different from one another and are a linear or branched $C_1$-$C_{20}$ linear or branched alkyl, $C_2$-$C_{20}$alkenyl, $C_3$-$C_{20}$ cycloalkyl, $C_6$-$C_{20}$aryl, $C_6$-$C_{20}$aryl$C_1$-$C_{20}$alkyl or $C_1$-$C_{20}$alkyl$C_6$-$C_{20}$aryl group, optionally containing heteroatoms.

Suitable enamino-imines have the general formula

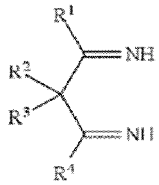

wherein $R^2$ and $R^3$ are equal to or different from one another and are hydrogen, or a $C_1$-$C_{20}$ linear or branched alkyl, $C_2$-$C_{20}$alkenyl, $C_3$-$C_{20}$ cycloalkyl, $C_6$-$C_{20}$aryl, $C_6$-$C_{20}$aryl$C_1$-$C_{20}$alkyl or $C_1$-$C_{20}$alkyl$C_6$-$C_{20}$aryl group, optionally containing heteroatoms, and $R^2$ and $R^3$, being joined to the same carbon atom, can be linked together to form a cycle; and $R^1$ and $R^4$ are equal to or different from one another and are a linear or branched $C_1$-$C_{20}$ linear or branched alkyl, $C_2$-$C_{20}$alkenyl, $C_3$-$C_{20}$ cycloalkyl, $C_6$-$C_{20}$aryl, $C_6$-$C_{20}$aryl$C_1$-$C_{20}$alkyl or $C_1$-$C_{20}$alkyl$C_6$-$C_{20}$aryl group, optionally containing heteroatoms.

The external electron donor (ED) is optional. Suitable external electron donors (ED) include certain silanes, ethers, esters, amines, ketones, heterocyclic compounds and blends of these. Preferably, 1,3-diether as described above or a silane can be used.

The organoaluminium compound is advantageously an Al-alkyl compound of the Al-trialkyls family, such as Al-triethyl, Al-triisobutyl, Al-tri-n-butyl, and linear or cyclic Al-alkyl compounds containing two or more Al atoms bonded to each other by way of O or N atoms, or $SO_4$ or $SO_3$ groups. Triethyl aluminium is preferred.

The metallocene catalysts are compounds of Group IV transition metals of the Periodic Table such as titanium, zirconium, hafnium, etc., which have a coordinated structure with a metal compound and ligands composed of one or two groups of cyclopentadienyl, indenyl, fluorenyl or their derivatives. In some preferred embodiments, the metallocene catalyst system comprises a bridged metallocene component, a support and an activating agent.

In some embodiments, the metallocene component is a metallocene of the following general formula: $(\mu\text{-}R^a)(R^b)(R^c)MX_1X_2$, wherein $R^a$, $R^b$, $R^c$, M, $X_1$, $X_2$ have the meaning given herein. $R^a$ is a bridge between $R^b$ and $R^c$, i.e. $R^a$ is chemically connected to $R^b$ and $R^c$. In a preferred embodiment, $R^a$ is selected from the group consisting of $-(CR^1R^2)_p-$, $-(SiR^1R^2)_p-$, $-(GeR^1R^2)_p-$, $-(NR^1)_p-$, $-(PR^1)_p-$, $-(N^+R^1R^2)_p-$ and $-(P^+R^1R^2)_p-$, and p is 1 or 2, and $R^1$ and $R^2$ are each independently selected from the group consisting of hydrogen, $C_1$-$C_{10}$alkyl, $C_5$-$C_8$cycloalkyl, $C_6$-$C_{15}$aryl, $C_{1-10}$alkyl$C_{6-15}$aryl, or any two neighbouring R (i.e. two neighbouring $R^1$, two neighbouring $R^2$, or $R^1$ with a neighbouring $R^2$) may form a cyclic saturated or non-saturated $C_4$-$C_{10}$ ring; each $R^1$ and $R^2$ may, in turn, be substituted in the same way. Preferably, $R^a$ is $-(CR^1R^2)_p-$ or $-(SiR^1R^2)_p-$with $R^1$, $R^2$ and p as defined above. Most preferably, $R^a$ is $-(SiR^1R^2)_p-$ with $R^1$, $R^2$ and p as defined above. Specific examples of $R^a$ include $Me_2C$, ethanediyl ($-CH_2-CH_2-$), $Ph_2C$ and $Me_2Si$. M is a metal selected from Ti, Zr and Hf, preferably it is Zr. $X^1$ and $X^2$ are each independently selected from the group consisting of halogen, hydrogen, $C_1$-$C_{10}$alkyl, $C_6$-$C_{15}$aryl, $C_{1-10}$alkyl$C_{6-15}$aryl. Preferably, $X^1$ and $X^2$ are halogen or methyl. $R^b$ and $R^c$ are selected independently from one another and comprise a cyclopentadienyl ring. Preferred examples of halogen are Cl, Br, and I. Preferred examples of $C_1$-$C_{10}$alkyl are methyl, ethyl, n-propyl, isopropyl, n-butyl, isobutyl, and tertbutyl. Preferred examples of $C_5$-$C_7$cycloalkyl are cyclopentyl, cyclohexyl, cycloheptyl and cyclooctyl. Preferred examples of $C_6$-$C_{15}$aryl are phenyl and indenyl. Preferred examples of alkylaryl with $C_1$-$C_{10}$alkyl and $C_6$-$C_{15}$aryl are benzyl ($-CH_2-Ph$), and $-(CH_2)_2-Ph$. In some preferred embodiments, $R^b$ and $R^c$ are both substituted cyclopentadienyl, or are independently from one another unsubstituted or substituted indenyl or tetrahydroindenyl, or $R^b$ is a substituted cyclopentadienyl and $R^c$ a substituted or unsubstituted fluorenyl. More preferably, $R^b$ and $R^c$ may both be the same and may be selected from the group consisting of substituted cyclopentadienyl, unsubstituted indenyl, substituted indenyl, unsubstituted tetrahydroindenyl and substituted tetrahydroindenyl. By "unsubstituted" is meant that all positions on $R^b$

resp. $R^c$, except for the one to which the bridge is attached, are occupied by hydrogen. By "substituted" is meant that, in addition to the position at which the bridge is attached, at least one other position on $R^b$ and/or $R^c$ is occupied by a substituent other than hydrogen, wherein each of the substituents may independently be selected from the group consisting of $C_1$-$C_{10}$alkyl, $C_5$-Cycloalkyl, $C_6$-$C_{15}$aryl, and $C_{1-10}$alkyl$C_{6-15}$aryl, or any two neighboring substituents may form a cyclic saturated or non-saturated $C_4$-$C_{10}$ ring. A substituted cyclopentadienyl may, for example, be represented by the general formula $C_5R^3R^4R^5R^6$. A substituted indenyl may, for example, be represented by the general formula $C_9R^7R^8R^9R^{10}R^{11}R^{12}R^{13}R^{14}$. A substituted tetrahydroindenyl may, for example, be represented by the general formula $C_9H_4R^{15}R^{16}R^{17}R^{18}$. A substituted fluorenyl may, for example, be represented by the general formula $C_{13}R^{19}R^{20}R^{21}R^{22}R^{23}R^{24}R^{25}R^{26}$. Each of the substituents $R^3$ to $R^{26}$ may independently be selected from the group consisting of hydrogen, $C_1$-$C_{10}$alkyl, $C_5$-$C_7$cycloalkyl, $C_6$-$C_{15}$aryl, and $C_{1-10}$alkyl$C_{6-15}$aryl, or any two neighboring R may form a cyclic saturated or non-saturated $C_4$-$C_{10}$ ring; provided, however, that not all substituents simultaneously are hydrogen. Preferred metallocene components are those having $C_2$-symmetry or those having $C_1$-symmetry. Most preferred are those having $C_2$-symmetry. Particularly suitable metallocene components are those wherein $R^b$ and $R^c$ are the same and are substituted cyclopentadienyl, preferably wherein the cyclopentadienyl is substituted in the 2-position, the 3-position, or simultaneously the 2-position and the 3-position. Particularly suitable metallocene components are also those wherein $R^b$ and $R^c$ are the same and are selected from the group consisting of unsubstituted indenyl, unsubstituted tetrahydroindenyl, substituted indenyl and substituted tetrahydroindenyl. Particularly suitable metallocene components may also be those wherein $R^b$ is a substituted cyclopentadienyl and $R^c$ is a substituted or unsubstituted fluorenyl.

The metallocene catalyst may be supported according to any method known in the art. The support can be any organic or inorganic solid, particularly porous supports. Preferably, the support material is an inorganic oxide in its finely divided form. Suitable support materials include solid inorganic oxides, such as silica, alumina, magnesium oxide, titanium oxide, boron trioxide, calcium oxide, zinc oxide, barium oxide, thorium oxide, as well as mixed oxides of silica and one or more Group 2 or 13 metal oxides, such as silica-magnesia and silica-alumina mixed oxides. Silica, alumina, and mixed oxides of silica and one or more Group 2 or 13 metal oxides are preferred support materials. Preferred examples of such mixed oxides are the silica-aluminas. Most preferred is a silica compound. In a preferred embodiment, the metallocene catalyst is provided on a solid support, preferably a silica support. The silica may be in granular, agglomerated, fumed or other forms.

In some embodiments, alumoxane is used as an activating agent for the metallocene catalyst. As used herein, the term "alumoxane" and "aluminoxane" are used interchangeably and refer to a substance, which is capable of activating the metallocene catalyst. For example, alumoxanes comprise oligomeric linear and/or cyclic alkyl alumoxanes. In a further embodiment, the alumoxane has the formulae (V) or (VI)

$R^x$-(Al($R^x$)-O)$_x$-Al$R^x$2 (V) for oligomeric, linear alumoxanes; or

(-Al($R^x$)-O-)$_y$ (VI) for oligomeric, cyclic alumoxanes

wherein x is 1-40, and preferably 10-20; wherein y is 3-40, and preferably 3-20; and wherein each $R^x$ is independently selected from a $C_1$-$C_8$alkyl, and preferably is methyl. In a preferred embodiment, the alumoxane is methylalumoxane (MAO).

The polymerization of propylene can, for example, be carried out in liquid propylene as reaction medium (bulk polymerization). It can also be carried out in diluents, such as hydrocarbon that is inert under polymerization condition (slurry polymerization). It can also be carried out in the gas phase. Those processes are well known to one skilled in the art.

## The polypropylene resin A

The melt flow index of polypropylene resin A is at most 2.0 g/10 min as measured according to the method of standard ISO 1133, condition M, at 230 °C and under a load of 2.16 kg; preferably, at most 1.8 g/10 min; more preferably, at most 1.5 g/10 min; even more preferably, at most 1.0 g/10 min; most preferably, at most 0.8 g/10 min; and even most preferably, at most 0.5 g/10 min.

The melt flow index of polypropylene resin A is at least 0.05 g/10 min as measured according to the method of standard ISO 1133, condition M, at 230°C and under a load of 2.16 kg; preferably, at least 0.10 g/10 min; more preferably, at least 0.15 g/10 min; and even more preferably, at least 0.20 g/10 min.

The polypropylene resin A can be Ziegler-Natta catalyzed or metallocene-catalyzed. With preference, the polypropylene resin A is Ziegler-Natta catalyzed.

The melting point of polypropylene resin A is at least 140 °C as measured according to ISO 3146; for example, at least 150 °C; for example, at least 155 °C; for example, at least 158 °C; for example, at least 160 °C; and for example, at least 162 °C.

Polypropylene resins suitable for the disclosure as propylene A are commercially available from Total®.

A non-limitative example is Total ® PPH 1060, a polypropylene homopolymer with a density of 0.905 g/cm$^3$, as measured according to ISO 1183, a melt flow index of 0.3 g/10 min, as measured according to ISO 1133 at 230 °C under a load of 2.16 kg, a melting point of 165 °C, as measured according to ISO 3146, and a flexural modulus of 1500

MPa, as measured according to ISO 178.

Another non-limitative example is Total ® PPH 3060, a polypropylene homopolymer with a density of 0.905 g/cm$^3$, as measured according to ISO 1183, a melt flow index of 1.8 g/10 min, as measured according to ISO 1133 at 230 °C under a load of 2.16 kg, a melting point of 165 °C, as measured according to ISO 3146, and a flexural modulus of 1300 MPa, as measured according to ISO 178.

The polypropylene resin B

The melt flow index of polypropylene resin B is at least 8 g/10 min as measured according to the method of standard ISO 1133, condition M, at 230 °C and under a load of 2.16 kg; preferably, at least 10 g/10 min; more preferably, at least 15 g/10 min; even more preferably, at least 20 g/10 min; most preferably, at least 25 g/10 min; and even most preferably, at least 30 g/10 min.

The melt flow index of polypropylene resin B is at most 200 g/10 min as measured according to the method of standard ISO 1133, condition M, at 230°C and under a load of 2.16 kg; preferably, at most 150 g/10 min; more preferably, at most 120 g/10 min; even more preferably, at most 100 g/10 min; most preferably, at most 80 g/10 min; and even most preferably, at most 50 g/10 min.

The melting point of polypropylene resin B is at most 157 °C as measured according to ISO 3146; preferably, at most 155 °C; more preferably, at most 153 °C.

The polypropylene resin B can be metallocene-catalyzed or Ziegler-Natta catalyzed. Polypropylene resins suitable for the disclosure as propylene B are commercially available from Total®. A non-limitative example is Total ® PPR 10232, a Ziegler-Natta catalyzed polypropylene which is a nucleated and antistatic random copolymer polypropylene with a density of 0.902 g/cm$^3$, as measured according to ISO 1183, a melt flow index of 40 g/10 min, as measured according to ISO 1133 at 230°C under a load of 2.16 kg, a melting point of 147 °C, as measured according to ISO 3146, and a flexural modulus of 1150 MPa, as measured according to ISO 178, and comprising 3.3 wt.% of ethylene.

Another non-limitative example is Total ® MR10MX0, is a metallocene random copolymer with a melt Flow Index of 10 g/10 min, as measured according to ISO 1133 at 230 °C under a load of 2.16 kg, a melting point of 140 °C, as, measured according to ISO 3146, and a flexural modulus of 1200 MPa, as measured according to ISO 178.

The carbon particles

The composite material further comprises carbon particles that may be graphene or carbon nanotubes or any combination thereof.

For example, the composite material may comprise from 0.1 to 5.0 wt.% of carbon particles based on the total weight of the composition as determined according to ISO 11358; preferably, from 0.1 to 4.2 wt.%; more preferably from 1.0 to 4.0 wt.%; even more preferably from 1.5 to 3.5 wt.%, most preferably, from 2.0 to 3.0 wt.%.

For example, the composite material may comprise at least 0.1 wt.% of carbon particles based on the total weight of the composition as determined according to ISO 11358; preferably, at least 0.1 wt.% of carbon particles; more preferably, at least 0.5 wt.% of carbon particles; even more preferably, at least 0.8 wt.% of carbon particles; most preferably, at least 1.0 wt.% of carbon particles; even most preferably, at least 1.2 wt.% of carbon particles; or at least 1.5 wt.% of carbon particles or at least 1.8 wt.% of carbon particles or at least 2.0 wt.% of carbon particles.

In a complementary or alternative manner, the composite material may comprise at most 5.0 wt.% of carbon particles based on the total weight of the composition as determined according to ISO 11358; preferably, at most 4.8 wt.% of carbon particles; more preferably, at most 4.5 wt.% of carbon particles; even more preferably, at most 4.2 wt.% of carbon particles; most preferably, at most 4.0 wt.% of carbon particles; even most preferably, at most 3.8 wt.% of carbon particles or at most 3.5 wt.% of carbon particles or at most 3.2 wt.% of carbon particles or at most 3.0 wt.% of carbon particles or at most 2.7 wt.% of carbon particles.

For example, the carbon particles are or comprise carbon nanotubes; preferably, the carbon particles comprise at least 50 wt.% of carbon nanotubes based on the total weight of the carbon particles; more preferably, the carbon particles comprise at least 80 wt.% of carbon nanotubes based on the total weight of the carbon particles; and even more preferably, 100 wt.% the carbon particles are carbon nanotubes.

Wherein carbon particles are or comprise carbon nanotubes; the composite material may comprise from 1.0 to 5.0 wt.% of carbon nanotubes based on the total weight of the composition as determined according to ISO 11358; preferably, from 0.1 to 4.2 wt.%; more preferably from 1.0 to 4.0 wt.%; even more preferably from 1.5 to 3.5 wt.%, most preferably, from 2.0 to 3.0 wt.%.

For example, the composite material may comprise at least 0.08 wt.% of carbon nanotubes based on the total weight of the composition as determined according to ISO 11358; preferably, at least 0.1 wt.% of carbon nanotubes; more preferably, at least 0.5 wt.% of carbon nanotubes; even more preferably, at least 0.8 wt.% of carbon nanotubes; most preferably, at least 1.0 wt.% of carbon nanotubes; even most preferably, at least 1.2 wt.% of carbon nanotubes;

or at least 1.5 wt.% of carbon nanotubes or at least 1.8 wt.% of carbon nanotubes or at least 2.0 wt.% of carbon nanotubes.

In a complementary or alternative manner, the composite material may comprise at most 5.0 wt.% of carbon nanotubes based on the total weight of the composition as determined according to ISO 11358; preferably, at most 4.8 wt.% of carbon nanotubes; more preferably, at most 4.5 wt.% of carbon nanotubes; even more preferably, at most 4.2 wt.% of carbon nanotubes; most preferably, at most 4.0 wt.% of carbon nanotubes; even most preferably, at most 3.8 wt.% of carbon nanotubes or at most 3.5 wt.% of carbon nanotubes or at most 3.2 wt.% of carbon nanotubes or at most 3.0 wt.% of carbon nanotubes or at most 2.7 wt.% of carbon nanotubes.

In a preferred embodiment, at least 80 wt.% of the carbon particles are carbon nanotubes having an average length of 1.2 μm or more as determined by transmission electron microscopy; preferably, 100 wt.% of the carbon particles are carbon nanotubes having an average length of 1.2 μm or more. The length of the carbon nanotubes is determined before the said carbon nanotubes are blended with a polypropylene resin.

Suitable carbon nanotubes used in the present disclosure can generally be characterized by having a size from 1 nm to 5000 nm, this definition of size can be limited to two dimensions only, i.e. the third may be outside of these limits.

Suitable carbon nanotubes also referred to as "nanotubes" herein, can be cylindrical in shape and structurally related to fullerenes, an example of which is Buckminster fullerene ($C_{60}$). Suitable carbon nanotubes may be open or capped at their ends. The end cap may, for example, be a Buckminster-type fullerene hemisphere. Suitable carbon nanotubes used in the present disclosure can comprise more than 90%; preferably, more than 95%; more preferably, more than 99% and most preferably, more than 99.9% of their total weight in carbon. However, minor amounts of other atoms may also be present.

Suitable carbon nanotubes to be used in the present disclosure can be prepared by any method known in the art. They can be prepared by the catalyst decomposition of hydrocarbons, a technique that is called Catalytic Carbon Vapor Deposition (CCVD). Other methods for preparing carbon nanotubes include the arc-discharge method, the plasma decomposition of hydrocarbons or the pyrolysis of selected polyolefin under selected oxidative conditions. The starting hydrocarbons can be acetylene, ethylene, butane, propane, ethane, methane or any other gaseous or volatile carbon-containing compound. The catalyst, if present, is used in either pure or in supported form. The presence of a support greatly improves the selectivity of the catalysts but it contaminates the carbon nanotubes with support particles, in addition to the soot and amorphous carbon prepared during pyrolysis. Purification can remove these by-products and impurities. This can be carried out according to the following two steps:

1) the dissolution of the support particles, typically carried out with an appropriate agent that depends upon the nature of the support and

2) the removal of the pyrolytic carbon component, typically based on either oxidation or reduction processes.

Nanotubes can exist as single-walled nanotubes (SWNT) and multi-walled nanotubes (MWNT). In single-walled nanotubes, a one atom thick sheet of atoms, for example, a one atom thick sheet of graphite (also called graphene), is rolled seamlessly to form a cylinder. Multi-walled nanotubes consist of a number of such cylinders arranged concentrically. The arrangement in a multi-walled nanotube can be described by the so-called Russian doll model, wherein a larger doll opens to reveal a smaller doll.

For example, the nanotubes are multi-walled carbon nanotubes; preferably, multi-walled carbon nanotubes having on average from 5 to 15 walls.

Nanotubes, irrespectively of whether they are single-walled or multi-walled, may be characterized by their outer diameter or by their length or by both.

Single-walled nanotubes are preferably characterized by a diameter of at least 0.5 nm; more preferably, of at least 1 nm; and most preferably, of at least 2 nm. Preferably, their diameter is at most 50 nm; more preferably, at most 30 nm; and most preferably, at most 10 nm. Preferably, the length of single-walled nanotubes is at least 0.05 μm; more preferably, at least 0.1 μm; even more preferably, at least 1 μm; and most preferably at least 1.2 μm. Preferably, their length is at most 50 mm; more preferably, at most 25 mm.

Multi-walled nanotubes are preferably characterized by an outer diameter of at least 1 nm; more preferably, of at least 2 nm, 4 nm, 6 nm or 8 nm; and most preferably, of at least 9 nm. The preferred outer diameter is at most 100 nm; more preferably, at most 80 nm, 60 nm or 40 nm, and most preferably, at most 20 nm. Most preferably, the outer diameter is in the range from 9 nm to 20 nm. The preferred length of the multi-walled nanotubes is at least 100 nm; more preferably, at least 1.0 μm; and most preferably, at least 1.2 μm. Their preferred length is at most 500 μm; more preferably, at most 100 μm. For example, the length is ranging from 100 nm to 10 μm; or ranging from 1.0 μm to 9.0 μm; or from 1.2 μm to 8.0 μm. For example, the multi-walled carbon nanotubes have an average outer diameter in the range from 9 nm to 20 nm or an average length in the range from 100 nm to 10 μm or both.

Preferred carbon nanotubes are carbon nanotubes having a surface area of 200-400 $m^2/g$ (measured by BET method).

Preferred carbon nanotubes are carbon nanotubes having a mean number of 5-15 walls.

The carbon nanotubes have a carbon purity of at least 80 % by weight, preferably, of at least 85 % by weight, and more preferably, about 90 % by weight (measured by thermal gravimetric analysis).

Non-limiting examples of commercially available multi-walled carbon nanotubes are Graphistrength™ 100, available from Arkema, Nanocyl™ NC 7000 available from Nanocyl, FloTube™ 9000 available from CNano Technology.

The masterbatch and the polypropylene resin C

For example, the carbon particles are provided in the form of a masterbatch comprising a blend of a polypropylene resin C and the carbon particles.

For example, the masterbatch comprises a blend of:

- at least 5.0 wt.% of carbon particles as determined according to ISO 11358 and based on the total weight of said masterbatch; wherein the carbon particles are selected from nanographene, carbon nanotubes or any combination thereof; and
- a polypropylene resin C having an MI2 ranging from 100 to 260 g/10 min as determined according to ISO 1133 at 230 °C under a load of 2.16 kg;

The polypropylene resin C is selected from a propylene homopolymer and/or a copolymer of propylene with one or more comonomer selected from ethylene and $C_4$-$C_{10}$ alpha-olefins. The definition given for the homopolymer and the copolymer of the polypropylene resin A and B applies to the polypropylene resin C. With preference, the polypropylene resin C is a propylene homopolymer. The definitions given in relation to the polypropylene resin A and B regarding propylene homopolymer, random copolymer and heterophasic copolymer apply to the polypropylene resin C.

For example, the polypropylene resin C is a metallocene-catalyzed polypropylene and has a molecular weight distribution ranging from 2.0 to 4.5.

With preference, the polypropylene resin C has a melt index MI2 ranging from 105 to 250 g/10 min as determined according to ISO 1133 at 230 °C under a load of 2.16 kg; preferably, from 110 to 200 g/10 min; more preferably from 115 to 180 g/10 min; and most preferably, from 120 to 160 g/10 min. The value of MI2 of the second crystalline polypropylene resin is obtained without a degradation treatment.

More preferably, the polypropylene resin C has a melt index MI2 of at least 102.0 g/10 min, even more preferably of at least 105.0 g/10 min, most preferably of at least 110.0 g/10 min, and even most preferably of at least 120 g/10 min as measured according to ISO 1133 at 230 °C under a load of 2.16 kg. The value of MI2 of the second crystalline polypropylene resin is obtained without a degradation treatment.

More preferably, the polypropylene resin C has a melt index MI2 of at most 250.0 g/10 min, preferably of at most 200.0 g/10 min, more preferably of at most 170.0 g/10 min, and most preferably of at most 160.0 g/10 min as measured according to ISO 1133 at 230 °C under a load of 2.16 kg. The value of MI2 of the polypropylene resin C is obtained without a degradation treatment.

Preferably, the polypropylene resin C has a melting temperature Tm comprised between 130 °C and 170 °C, as measured according to ISO 11357-3, more preferably, of at least 150 °C.

In an embodiment, the polypropylene resin C has a density between 0.880 to 0.920 g/cm$^3$ as determined according to ISO 1183.

Commercially available polypropylene resins suitable for use as polypropylene resin C are selected from TOTAL®. An example is MH140CN0. This product has a density of 0.905 g/cm$^3$ and a melt index MI2 of 140 g/10 min as determined according to ISO 1133 at 230 °C under a load of 2.16 kg.

The masterbatch according to the invention comprises a polypropylene and carbon particles. According to a preferred embodiment, the carbon particles are present in an amount from 5.0 to 25.0 wt.% as based on the total weight of the masterbatch, preferably from 7.5 to 20 wt.%, and more preferably between 9.0 to 15.0 wt.%.

For example, the process for the preparation of the masterbatch according to the present invention comprises the steps of:

i. providing carbon nanotubes,

ii. providing a polypropylene resin C having a melting temperature, Tm, measured according to ISO 11357-3, and wherein said second crystalline polypropylene resin has a melt index MI2 ranging from 100 to 260 g/10 min as determined according to ISO 1133 at 230 °C under a load of 2.16 kg,

iii. blending together said carbon nanotubes and said polypropylene resin C by extrusion in an extruder comprising a transport zone and a melting zone maintained at a temperature comprised between Tm + 1 °C and Tm + 50 °C, preferably, between Tm + 5 °C and Tm + 30 °C, and

iv. forming a masterbatch through a die, said masterbatch,

- comprising at least 5 wt.% of carbon nanotubes based on the total weight of the masterbatch as determined according to ISO 11358, and
- having a high load melt index, HLMI, of from 2 g/10 min to 1000 g/10 min, preferably, ranging from 10 to 1000 g/10 min, determined according to ISO 1133 under a load of 21.6 kg.

In a preferred embodiment, the process further comprises the step of blending from 0.01 to 4.0 wt.%, preferably, from 0. 1 to 2.0 wt.% of one or more processing aids based on the total weight of the masterbatch, with the polypropylene resin C and the carbon nanotubes in step iii).

Therefore, in an embodiment, the masterbatch further comprises from 0.01 to 4.0 wt.% of a processing aid as based on the total weight of the masterbatch, said processing aid is selected from fluoroelastomers, waxes, tristearin, erucyl amide, oleic acid amide, ethylene-acrylic acid copolymer, ethylene-vinyl acetate copolymer, cetyl trimethyl ammonium bromide, polysiloxanes, oleamide, stearamide, behenamide, oleyl palmitamide, ethylene bis-oleamide, ethylene bis (stearamide) (EBS) and any mixture thereof.

In a preferred embodiment, step iii) is carried out on co-rotating twin-screw extruder at a screw speed of at least 300 rpm, preferably, at least 500 rpm.

Other possible components of the composite material

In some embodiments, the composite material comprises one or more additives. The additives are such as for example antioxidants, light stabilizers, acid scavengers, lubricants, antistatic agents, fillers, nucleating agents, clarifying agents, colourants. An overview of useful additives is given in Plastics Additives Handbook, ed. H. Zweifel, 5th edition, Hanser Publishers.

Optionally, the composite material may comprise one or more nucleating agents.

In some embodiments, the polypropylene used herein comprises a nucleating agent. For the purposes of the present application, a nucleating agent is defined as a chemical compound that raises the crystallization temperature of the polypropylene. Suitable nucleating agents for use in the present disclosure can be selected from any of the nucleating agents known to the skilled person. For example, the nucleating agent is an alpha-nucleating agent. In some embodiment, the alpha-nucleating agent is selected from the group comprising talc, carboxylate salts, sorbitol acetals, phosphate ester salts, substituted benzene tricarboxamides and polymeric nucleating agents, as well as blends thereof.

Examples of suitable carboxylate salts include organocarboxylic acid salts. Particular examples are sodium benzoate and lithium benzoate. The organocarboxylic acid salts may also be alicyclic organocarboxylic acid salts, such as bicyclic organodicarboxylic acid salts and in particular bicyclo[2.2.1]heptane dicarboxylic acid salt. A nucleating agent of this type is sold as HYPERFORM® HPN-68 by Milliken Chemical. Examples of suitable sorbitol acetals include dibenzylidene sorbitol (DBS), bis(p-methyl-dibenzylidene sorbitol) (MDBS), bis(p-ethyl-dibenzylidene sorbitol), bis(3,4-dimethyl-dibenzylidene sorbitol) (DMDBS), and bis(4-propylbenzylidene) propyl sorbitol. Bis(3,4-dimethyl-dibenzylidene sorbitol) (DMDBS) and bis(4-propylbenzyhdene) propyl sorbitol are preferred. These can, for example, be obtained from Milliken Chemical under the trade names of Millad 3905, Millad 3940, Millad 3988 and Millad NX8000. Examples of suitable phosphate ester salts include salts of 2,2'-methylene-bis-(4,6-di-tert-butylphenyl)phosphate. Such phosphate ester salts are for example available as NA-1 1 or NA-21 from Asahi Denka. Examples of suitable substituted tricarboxamides include compounds of general formula (I):

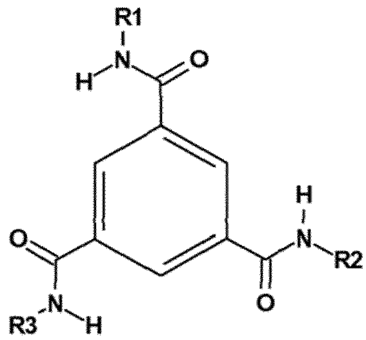

(I)

wherein R1, R2 and R3, independently of one another, are selected from $C_1$-$C_{20}$ alkyl, $C_5$-$C_{12}$ cycloalkyl, or phenyl, each of which may, in turn, be substituted with one or more $C_1$-$C_{20}$ alkyl, $C_5$-$C_{12}$ cycloalkyl, phenyl, hydroxyl, $C_1$-$C_{20}$ alkylamino or $C_1$-$C_{20}$ alkyloxy etc. Examples of $C_1$-$C_{20}$ alkyl include methyl, ethyl, n-propyl, n-butyl, isobutyl, tertbutyl, n-pentyl, iso-pentyl, 1,1-dimethylpropyl, 1,2-dimethylpropyl, 3-methylbutyl, hexyl, heptyl, octyl or 1,1,3,3-tetramethylbutyl.

Examples of $C_5$-$C_{12}$ cycloalkyl include cyclopentyl, cyclohexyl, cyclooctyl, cyclododecyl, adamantyl, 2-methylcyclohexyl, 3-methylcyclohexyl or 2,3-dimethylcyclohexyl. Such nucleating agents are disclosed in WO 03/102069 and by Blomenhofer et al. in Macromolecules 2005, 38, 3688-3695. Non-limiting examples of polymeric nucleating agents include polymeric nucleating agents containing vinyl compounds, such as for example those disclosed in EP0152701 and EP 0368577. Polymeric nucleating agents containing vinyl compounds can either be physically or chemically blended with the polypropylene. Suitable vinyl compounds include vinyl cycloalkanes or vinyl cycloalkenes having at least 6 carbon atoms, such as for example vinyl cyclopentane, vinyl-3-methyl cyclopentane, vinyl cyclohexane, vinyl-2-methyl cyclohexane, vinyl-3-methyl cyclohexane, vinyl norbornane, vinyl cyclopentene, vinyl cyclohexene, vinyl-2-methyl cyclohexene. Further examples of polymeric nucleating agents include poly-3-methyl-1-butene, polydimethylstyrene, polysilanes and polyalkylxylenes. These polymeric nucleating agents can be introduced into the polypropylene either by chemical or by physical blending.

Beta nucleating agents useful in embodiments disclosed herein induce the formation of beta-crystals in polypropylene, and may include various organic and inorganic nucleating agents, such as: the gamma-crystalline form of a quinacridone colourant Permanent Red E3B "Q-Dye;" the bisodium salt of o-phthalic acid; the aluminium salt of 6-quinizarin sulfonic acid; isophthalic and terephthalic acids; and N',N'-dicyclohexyl-2,6-naphthalene dicarboxamide, also known as NJStar NU-100, available from the New Japan Chemical Co.; nucleating agents based upon salts of rosin/adiebetic acid; zinc (II) monoglycerolate; nucleating agents based upon diamide compounds as disclosed in U.S. Pat. No. 6,235,823, such as N-cyclohexyl-4-(N-cyclohexylcarbonylamino)benzamide and N,N'-1,4-cyclohexane-bis-benzamide, for example; nucleating agents based upon trimesic acid derivatives, such as disclosed in WO02/46300, WO03/102069, WO2004/072168, including, for example, 1,3,5-benzenetricarboxylic acid tris(cyclopentylamide), 1,3,5-benzenetricarboxylic acid tris(cyclohexylamide), and 1,3,5-benzenetricarboxylic acid tris(tert-butyl)amide. Beta nucleating agents as described in JPH8144122, JP7033895 and CN1568845 may also be used. Other suitable beta nucleating agents are disclosed in DE3,610,644, prepared from two components, (A) an organic dibasic acid, such as pimelic acid, azelaic acid, o-phthalic acid, terephthalic acid, and isophthalic acid; and (B) an oxide, hydroxide or an acid salt of a metal of Group II, such as magnesium, calcium, strontium, and barium. The acid salt of the second component (B) may be derived from an organic or inorganic acid, such as a carbonate or a stearate.

The nucleating agents may be used in the form of powders, pellets, liquids, other commonly available forms, or combinations thereof, for admixture (melt blending) with polypropylenes. In other embodiments, the nucleating agent may be compounded with polypropylene to form a nucleating additive masterbatch for admixture (melt blending) with polypropylenes. Compositions including polypropylene(s) and nucleating agent(s) according to embodiments disclosed herein may be prepared by mixing or kneading the respective components at a temperature around or above the melting point temperature of one or more of the blend components. Typical polymer mixing or kneading equipment that is capable of reaching the desired temperatures and melt plastifying the mixture may be employed. These include mills, kneaders, extruders (both single screw and twin-screw), BANBURY® mixers, calenders, and the like. The sequence of mixing and methods may depend on the final composition as well as the form of the starting components (powder, pellet, masterbatch, etc.).

Process to produce the composite material

The disclosure also encompasses a process for preparing a composite material comprising the steps of:

i) providing a polypropylene resin B, wherein the polypropylene resin B is a polypropylene copolymer;

ii) providing carbon particles, wherein the carbon particles are selected from nanographene, carbon nanotubes or any combination thereof;

iii) melt blending the polypropylene resin B with the carbon particles to form a masterbatch;

iv) providing a polypropylene resin A; wherein the polypropylene resin A is a polypropylene homopolymer;

v) melt blending the masterbatch with the polypropylene resin A to form a composite material.

In a preferred embodiment, the process further comprises the step of blending from 0.01 to 4.0 wt.%, preferably, from 0.1 to 2.0 wt.% of one or more processing aids based on the total weight of the masterbatch, with the polypropylene resin B and the carbon nanotubes in step iii).

Therefore, for example, the masterbatch further comprises from 0.01 to 4.0 wt.% of a processing aid as based on the total weight of the masterbatch, said processing aid is selected from fluoroelastomers, waxes, tristearin, erucyl amide, oleic acid amide, ethylene-acrylic acid copolymer, ethylene-vinyl acetate copolymer, cetyl trimethyl ammonium

bromide, polysiloxanes, oleamide, stearamide, behenamide, oleyl palmitamide, ethylene bis-oleamide, ethylene bis (stearamide) (EBS) and any mixture thereof.

The process of producing a composite material can be continued with a step vi) of forming a sheet from the composite material. With preference, the sheet is formed by extrusion.

With preference, in all embodiments, the step v) of melt blending and the step vi) of forming a conductive sheet by extrusion are performed together in a single step using a single extruder. Thus, the different components of the composite material are dry blended together and directly provided to the extruder. The different components of the composite material are not melted blended nor chopped into pellets before the extrusion step.

Conducting the dry blending and the shaping of the sheet by extrusion in a single step allows achieving better electrical properties. Indeed, the fact that the composite material is not chopped into pellets before being extrusion allows reducing the percentage of carbon nanotubes being damaged under shear so their length is reduced.

## The article comprising the composite material

The disclosure further relates to an article comprising the composite material according to the first aspect; with preference, the article is a thermoformable article or a thermoformed article.

The article can be monolayered or multilayered. When the article is multilayered, the article comprises one or more layers of the composite material, for example, at least one external layer is made from the composite material, or both external layers are made from the composite material. In some preferred embodiments, the article comprises at least one polypropylene layer made of the composite material according to the disclosure.

The disclosure also encompasses sheets and thermoformed articles comprising a polypropylene layer made of a composite material according to the disclosure. The present disclosure further relates to a process for producing such sheets and thermoformed articles.

In some preferred embodiments, the article is a thermoformed article. Preferably, the article is a container, for example, a container for food or feed, drinking cups etc. In some embodiments, an article is a household appliance. In some preferred embodiments, the household appliance is a refrigerator or refrigerator component, or a freezer or freezer component. A refrigerator component or a freezer component may be selected from the list comprising: grid, shelf, door shelf, bin, or door bin. The composite material of the disclosure may show excellent environmental stress crack resistance (ESCR) at low temperatures, rendering it suitable for frozen packaging while retaining good mechanical properties.

The disclosure is remarkable in that the article shows good electrical properties such as a surface resistance of at most $5.10^6$ Ohm; preferably, of at most $1.10^6$ Ohm as measured according to IEC 61340-4-1 with an SRM110 meter; together with a low content of carbon particles. In a preferred embodiment, the carbon particles are or comprise at most 4.0 wt.% of carbon nanotubes and the article has a surface resistance of at most $5.10^6$ Ohm.

## Process for preparing an article

The disclosure also encompasses a process for preparing an article comprising the composite material.

In some preferred embodiments, the process for preparing an article comprises the steps of:

a) providing a composite material according to the disclosure;

b) forming a sheet or plate with the composite material of step a);

c) thermoforming the sheet or plate formed in step b) into an article according to the third aspect of the disclosure, or preferred embodiments thereof.

As seen above, the steps of (a) of providing a composite material and the step (b) of forming a sheet or plate with the composite material of step (a) can be conducted together in a single step.

Thermoformed articles can be generally produced by a two-stage process, wherein in the first stage a sheet is produced by melt-extruding a polymer (melt-extrusion stage), and in the second stage said sheet is shaped (thermoforming stage). The two stages may either directly follow each other (in-line thermoforming) or they may not directly follow each other, in which case the produced sheet is stored for some time (e.g. a few hours, days or months) first and only later fed to the thermoforming stage.

The sheet formed in step b) of the process for preparing an article may be produced on any melt extrusion sheet line, the sheet production process, for example, comprising the steps of:

(1) providing a composite material to an extruder;

(2) subsequently melting the composite material in the extruder to obtain a molten composite material;

(3) melt-extruding the molten composite material obtained in step (2) through a slit die to form an extrudate; and

(4) cooling the extrudate to obtain a sheet.

The disclosure also encompasses an extruded sheet, extruded corrugated sheet or plate formed from the composite material according to the first aspect of the disclosure.

The sheet obtained in step (4) of the sheet production process, is preferably obtained by extrusion through a flat die with cooling calender before being wound into a coil. The thickness distribution of the sheet is preferably controlled during production. The extrusion conditions are preferably optimized to avoid excessive shrinkage and allow distribution of uniform thickness. In some preferred embodiments, the sheet formed in step b) of the process for preparing an article, or step (4) of the sheet production process, has a thickness of at least 0.2 mm and at most 2.0 mm. In some preferred embodiments, the plate formed in step b) of the process for preparing an article has a thickness of at most 25 mm.

Step c) of the process for preparing an article comprises thermoforming the sheet or plate into an article. Thermoforming is one of the major methods of processing thermoplastic polymers to achieve, from calendered or extruded sheets, objects of widely varying thicknesses and very high production rate dimensions. The thermoforming stage (c) of the process for preparing an article can be performed on any thermoforming machine comprising a heating and a forming section.

In some preferred embodiments, the thermoforming stage (c) of the process for preparing an article comprises a first heating step, whereby the sheet or plate is heated to a temperature allowing its shaping. In some preferred embodiments, the thermoforming stage (c) of the process for preparing an article comprises a second shaping step, whereby the heated sheet or plate is shaped into a mould. In some preferred embodiments, the thermoforming stage (c) of the process for preparing an article comprises a third cooling step, after which the desired object is obtained. Preferably, the thermoforming stage (c) comprises a first heating step, a second shaping step, and a third cooling step.

Preferably, the thermoforming stage (c) of the process for preparing an article comprises the steps of:

(5) draping the sheet, preferably which is at a temperature at which it is soft, over or into a mould, thus obtaining a formed sheet;

(6) cooling the formed sheet to a temperature at which it maintains its shape; and

(7) removing the thermoformed sheet from the mould.

Optionally, the thermoforming stage (c) of the process for preparing an article may further comprise a step of warming the sheet to a temperature at which it is soft before it is draped. Such an optional step of warming the sheet may particularly be required when sheet production and thermoforming are done "off-line", i.e. not in series, and/or the sheet is stored for some time to allow it to cool to a temperature below the temperature at which it can be draped. Thus, the thermoforming stage of the process for preparing an article may comprise a step of:

(4a) warming the sheet obtained in step (4) of the sheet production process to a temperature at which it is soft, to obtain a soft sheet, which is then used in the draping step (5).

The present disclosure encompasses thermoforming of packaging, such as containers. The process can be done using in-line thermoforming, which is a processing technology whereby a thermoforming unit is placed right behind an extrusion line, to turn polymer pellets into the finished product in one operation.

The process can be done using a Form-Fill-and-Seal (FFS) line which comprises an unwinding station which feeds a standard thermoforming station: heaters raise the temperature of a sheet so that it can be formed with the aid of a punch, for example into the shape of one or more containers. These sheets have been previously prepared. The containers may then advance to a filling station which discharges the product into the containers. A lid may subsequently be provided over the containers to seal them. The containers may then be cut into 8 groups of 4 or individual portions fastened together. This type of thermoforming packaging allows the realization of a multipack. The advantage of this route is that the containers do not need to be sterilized as they are filled in a controlled environment to ensure the sterility of the entire environment.

In some preferred embodiments, stage (c) of the process for preparing an article is performed in an FFS line.

Optionally, the thermoforming stage (c) of the process for preparing an article may comprise a trimming step. Trimming is usually defined as the process of mechanical breaking the thermoformed sheet into two pieces, one of which is the desired thermoformed article, the other being the edge trim. Thus, the process as defined optionally comprises the step of 9) trimming the thermoformed sheet obtained in step 7) to obtain a thermoformed article.

The present application also encompasses the use of a composite material as defined herein in the production

of a sheet or thermoformed article.

The following examples serve to merely illustrate the disclosure and should not be construed as limiting its scope. While the disclosure has been shown in only some of its forms, it should be apparent to those skilled in the art that it is not so limited, but is susceptible to various changes and modifications without departing from the scope of the disclosure.

**TEST METHODS**

The density was measured according to the method of standard ISO 1183 at a temperature of 23°C.

The melt flow index (MFI) of the polypropylene or of the composite material was measured according to the method of standard ISO 1133, condition M, at 230 °C and under a load of 2.16 kg.

Thickness measurements were made by applying or by moving a magnetic sensor on one side of the material to be inspected, while a small metal ball was placed on the opposite inside face of the cup. The integrated Hall effect sensor measured the distance between the end of the probe and the ball. Measurements are expressed in a number of the measuring point from 1 to 8, as illustrated in Figure 1. It allowed evaluating the thickness of the walls with a measurement performed according to four axes in the cup (0°, 90°, 180°, and 270°).

Melting temperatures Tm were determined according to ISO 3146 on a DSC Q2000 instrument by TA Instruments. To erase the thermal history the samples are first heated to 200 °C and kept at 200 °C for a period of 3 minutes. The reported melting temperatures Tm are then determined with heating and cooling rates of 20 °C/min.

The content of carbon nanotubes in percentage by weight in blends (%CNT) can be determined by thermal gravimetric analysis (TGA) according to ISO 11358, using a Mettler Toledo STAR TGA/DSC 1 apparatus. Prior to the determination of the content of carbon nanotubes in % by weight in blends (%CNT), the carbon content of the carbon nanotubes in % by weight (%C-CNT) was determined as follows: 2 to 3 milligrams of carbon nanotubes were placed into a TGA. The material was heated at a rate of 20 °C/min from 30 °C to 600 °C in nitrogen (100 ml/min). At 600 °C, the gas was switched to air (100 ml/min), and the carbon oxidized, yielding the carbon content of the carbon nanotubes in % by weight (%C-CNT). The %C-CNT value was the average of 3 measurements. For the content of carbon nanotubes % by weight in blends (%CNT), 10 to 20 milligrams of sample was placed into a TGA. The material was heated at a rate of 20 °C/min from 30 °C to 600 °C in nitrogen (100 ml/min). At 600 °C, the gas was switched to air (100 ml/min), and the carbon oxidized, yielding to the carbon content of carbon nanotubes in the sample (%C-sample). The %C-sample value was the average of 3 measurements. The content of carbon nanotubes in % by weight in the sample (%CNT) was then determined by dividing the carbon content of carbon nanotubes in % by weight in samples (%C-sample) by the carbon content of the carbon nanotubes in % by weight (%C-CNT) and multiplying by 100.

$$\%CNT = \%C\text{-sample} / \%C\text{-CNT} * 100$$

The surface resistance (SR) (in Ohm) of the article was measured according to IEC 61340-4-1 with an SRM110 meter. The SRM110 is a surface resistance tester. Its internal parallel electrodes comply with DIN EN 100 015/1. IEC electrodes were externally connected for tests according to IEC 61340-4-1.

**EXAMPLES**

The following non-limiting examples illustrate the disclosure.

Example 1: Preparation of a masterbatch comprising carbon particles being carbon nanotubes

The carbon nanotubes used were multi-walled carbon nanotubes Nanocyl™ NC 7000, commercially available from Nanocyl. These CNTs have a surface area of 250-300 $m^2/g$ (measured by the BET method), a carbon purity of carbon of about 90 % by weight (measured by thermal gravimetric analysis), an average diameter of 9.5 nm and an average length of 1.5 $\mu$m (as measured by transmission electron microscopy).

A crystalline polypropylene resin C used has a melt flow index of 140 g/10 min as measured according to ISO 1133 H (230 °C, 2.16kg), a density of 0.905 $g/cm^3$ (ISO 1183) and a Tm of 150 °C (ISO 11357-3).

The masterbatch MB1 was prepared by blending polypropylene resin C and carbon nanotubes, using classical twin-screw extrusion process. Carbon nanotubes powder and polypropylene were introduced into the extruder such as to obtain a CNT content of about 10 % by weight based on the total weight of the masterbatch. The masterbatch MB1 was blended on Leitztriz co-rotating twin-screw extruder with an L/D ratio of 52 (D=60), the barrel temperature was set at 180°C.

Example 2: Production of the composites

The masterbatches produced in example 1 have been blended with the following polypropylene resin A and B.

Polypropylene resin A:

The polypropylene resin A used was polypropylene PPH1 for samples S01 to S03; and polypropylene PPH2 for samples S04 to S06.

PPH1: PPH 1060, commercially available from Total Refining & Chemicals, is a polypropylene homopolymer that is Ziegler-Natta catalyzed with a density of 0.905 g/cm$^3$, as measured according to ISO 1183, a melt flow index of 0.3 g/10 min, as measured according to ISO 1133 at 230 °C under a load of 2.16 kg, a melting point of 165 °C, as measured according to ISO 3146, and a flexural modulus of 1500 MPa, as measured according to ISO 178.

PPH2: PPH 3060, commercially available from Total Refining & Chemicals, is a polypropylene homopolymer that is Ziegler-Natta catalyzed with a density of 0.905 g/cm$^3$, as measured according to ISO 1183, a melt flow index of 1.8 g/10 min, as measured according to ISO 1133 at 230 °C under a load of 2.16 kg, a melting point of 165 °C, as measured according to ISO 3146, and a flexural modulus of 1300 MPa, as measured according to ISO 178.

Polypropylene resin B:

The polypropylene resin B used was polypropylene PPR1 for samples S01 to S03, and polypropylene PPR2 for samples S04 to S06.

PPR1: Ziegler-Natta catalyzed polypropylene commercially available from Total Refining & Chemicals under the reference PPR10232. PPR1 a nucleated and antistatic random copolymer polypropylene with a density of 0.902 g/cm$^3$, as measured according to ISO 1183, a melt flow index of 40 g/10 min, as measured according to ISO 1133 at 230°C under a load of 2.16 kg, a melting point of 147 °C, as measured according to ISO 3146, and a flexural modulus of 1150 MPa, as measured according to ISO 178, and comprising 3.3 wt.% of ethylene.

PPR2: metallocene random copolymer catalyzed polypropylene commercially available from Total Refining & Chemicals under the reference MR10MX0. PPR2 has a Melt Flow Index of 10 g/10 min, as measured according to ISO 1133 at 230 °C under a load of 2.16 kg, a melting point of 140 °C, as, measured according to ISO 3146, and a flexural modulus of 1200 MPa, as measured according to ISO 178.

The composition of the composites produced is reported in Table 1.

Example 3: Comparative composites

Comparative composites have been produced by blending PP1 or PP2 with a suitable amount of carbon nanotubes.

PP1: PPC 11645, commercially available from Total Refining & Chemicals, is a polypropylene heterophasic copolymer with a density of 0.905 g/cm$^3$, as measured according to ISO 1183, a melt flow index of 0.3 g/10 min, as measured according to ISO 1133 at 230 °C under a load of 2.16 kg, a melting point of 165°C, as measured according to ISO 3146, and a flexural modulus of 1700 MPa, as measured according to ISO 178.

PP2: PPC 3660, commercially available from Total Refining & Chemicals, is a polypropylene heterophasic copolymer with a density of 0.905 g/cm$^3$, as measured according to ISO 1183, a melt flow index of 1.3 g/10 min, as measured according to ISO 1133 at 230 °C under a load of 2.16 kg, a melting point of 165 °C, as measured according to ISO 3146, and a flexural modulus of 1200 MPa, as measured according to ISO 178.

The composition of the composites produced is reported in Table 1.

Example 4: Production of sheets and thermoforming

Sheets have been produced from the composites of Examples 2 and 3 and thermoformed. The electrical properties of the article are given in Table 2.

The sheets are produced starting with a dry blend of the respective components, i.e. PPA and PPB and PP-CNT masterbatch for the examples according to the disclosure and. PP1 or PP2 and PP-CNT masterbatch for the comparative examples. The dry-blend is introduced in the hopper of a Collin equipment. The (single) screw of the equipment is characterized by L/D=35 (L = length, D = diameter = 30 mm - The screw ends with a pineapple mixer and a Maddock's mixer). Temperature is imposed at 200 °C everywhere along the screw. A gear pump is located between the screw and the die (imposed pressure at the gear pump = 200 bars). The polymer exits (throughput = 8 kg/hour) from the Collin equipment through a flat die (thickness = 1.8 mm - length = 25 cm - imposed temperature at the die: 240 °C). When exiting from the die, the polymer arrives in a chill roll, regulated between 90 and 95 °C and rotating at 0.45 m/min at the surface. The so-produced sheet is 1.4 mm thick.

**Table 1: Composition of the blends**

| Sample | S01 | S02 | S03 | S04 | S05 | S06 | S07 | S08 | S09 | S10 | S11 | S12 | S13 | S14 |
|---|---|---|---|---|---|---|---|---|---|---|---|---|---|---|
| **PPA Type** | PPH1 | PPH1 | PPH1 | PPH2 | PPH2 | PPH2 | PP1 | PP1 | PP1 | PP2 | PP2 | PP2 | PP2 | PP2 |
| **PPA (wt.%)** | 15 | 14 | 12 | 22.5 | 21 | 18 | 75 | 70 | 60 | 80 | 75 | 70 | 65 | 60 |
| **MFI PPA (g/10 min)** | 0.3 | 0.3 | 0.3 | 1.8 | 1.8 | 1.8 | 0.3 | 0.3 | 0.3 | 1.3 | 1.3 | 1.3 | 1.3 | 1.3 |
| **PPB type** | PPR1 | PPR1 | PPR1 | PPR2 | PPR2 | PPR2 | - | - | - | - | - | - | - | - |
| **PPB (wt.%)** | 60 | 56 | 48 | 52.5 | 49 | 42 | - | - | - | - | - | - | - | - |
| **MFI PPB (g/10 min)** | 40 | 40 | 40 | 10 | 10 | 10 | - | - | - | - | - | - | - | - |
| **MB type** | MB1 | MB1 | MB1 | MB1 | MB1 | MB1 | MB1 | MB1 | MB1 | MB1 | MB1 | MB1 | MB1 | MB1 |
| **MB (wt.%)** | 25 | 30 | 40 | 25 | 30 | 40 | 25 | 30 | 40 | 20 | 25 | 30 | 35 | 40 |
| **MFI PPC** | 140 | 140 | 140 | 140 | 140 | 140 | 140 | 140 | 140 | 140 | 140 | 140 | 140 | 140 |

**Table 2: Results - surface resistance (Ohm)**

| Sample | S01 | S02 | S03 | S04 | S05 | S06 | S07 | S08 | S09 | S10 | S11 | S12 | S13 | S14 |
|---|---|---|---|---|---|---|---|---|---|---|---|---|---|---|
| **wt.% CNT** | 2.5 | 3.0 | 4.0 | 2.5 | 3.0 | 4.0 | 2.5 | 3.0 | 4.0 | 2.0 | 2.5 | 3.0 | 3.5 | 4.0 |
| **Sheet** | $10^6$ | $10^4$ | $10^4$ | $10^6$-$10^8$ | $10^4$-$10^5$ | $10^4$-$10^5$ | NC | NC | $10^5$-$10^8$ | NC | NC | $10^8$-$10^{12}$ | $10^6$ | $10^5$ |
| **Cup 20 mm*** | $10^7$ | $10^5$ | $10^4$ | $10^7$ | $10^6$ | $10^4$ | / | / | $10^6$ | / | / | / | $10^7$ | $10^8$ |
| **Multi-well packaging** | | | | | | | | | | | | | | |
| **1/5** | $10^6$ | $10^5$ | $10^4$ | $10^6$ | $10^5$ | $10^4$ | / | / | $10^7$ | / | / | $10^{11}$ | $10^7$ | $10^8$ |
| **1/10** | $10^6$ | $10^5$ | $10^4$ | $10^7$ | $10^5$ | $10^4$ | / | / | $10^8$ | / | / | NC | $10^7$ | $10^8$ |
| **1/15** | $10^6$ | $10^5$ | $10^4$ | $10^6$-$10^8$ | $10^6$-$10^7$ | $10^5$ | / | / | NC | / | / | NC | $10^7$ | $10^8$ |
| **1/20** | $10^6$ | $10^5$ | $10^4$ | $10^{12}$ | $10^6$-NC | $10^6$ | / | / | NC | / | / | NC | $10^7$ | $10^8$ |

NC: not conductive
*: measured with and without punching
/: not measured

For each sheet, two measurements of the surface resistance have been made in different locations of the sheet; the two values are indicated when different. In case, a better homogeneity of the electrical properties of the sheet is required, the person skilled in the art may further blend the composite before sheet extrusion.

From the results, it can be seen that, at an equivalent amount of CNT added to the composite material, a better conductivity is obtained in composite materials comprising a blend of two different polypropylene (A+B) compared to composite materials comprising a single polypropylene.

## Claims

1. A composite material **characterized in that** it comprises:

   - from 6 wt.% to 40 wt.% of a polypropylene resin A, based on the total weight of the composite material; wherein the polypropylene resin A is a polypropylene homopolymer or a polypropylene copolymer;
   - from 30 wt.% to 70 wt.% of a polypropylene resin B, based on the total weight of the composite material; wherein the polypropylene resin B is a polypropylene homopolymer or a polypropylene copolymer; and
   - from 0.1 to 4.2 wt.% of carbon particles, based on the total weight of the composition and as determined according to ISO 11358, wherein the carbon particles are selected from nanographene, carbon nanotubes or any combination thereof;

   **in that** the melt flow index of polypropylene resin A is at most 2.0 g/10 min as measured according to the method of standard ISO 1133, condition M, at 230 °C and under a load of 2.16 kg; and **in that** the ratio of the melt flow index of polypropylene resin B to the melt flow index of polypropylene resin A is at least 4.

2. The composite material according to claim 1, **characterized in that**

   - the polypropylene resin A and the polypropylene resin B have different melting points wherein the difference between the melting point of polypropylene resin A and the melting point of polypropylene resin B is at least 5.0 °C with the melting point being measured according to ISO 3146, and/or **in that**
   - the polypropylene resin A and the polypropylene resin B have different melting points wherein the melting point of polypropylene resin A is higher than the melting point of polypropylene resin B; and/or **in that**
   - the ratio of the melt flow index of polypropylene resin B to the melt flow index of polypropylene resin A is ranging from 5 to 150.

3. The composite material according to any one of claims 1 or 2, wherein the carbon particles are or comprise carbon nanotubes, and the composite material is **characterized in that** it comprises from 1.0 to 4.2 wt.% of carbon nanotubes based on the total weight of the composition as determined according to ISO 11358; preferably, from 1.3 to 4.1 wt.%; and more preferably, from 2.1 to 4.0 wt.%.

4. The composite material according to any one of claims 1 to 3, **characterized in that** the polypropylene resin A and/or the polypropylene resin B is a polypropylene copolymer comprising propylene monomers and at least 1.0 wt.% of one or more comonomers based on the total weight of the polypropylene resin A and/or the polypropylene resin B respectively; with preference, the polypropylene resin A and/or the polypropylene resin B is a random polypropylene copolymer and/or one or more comonomers are selected from ethylene and C4-C8 alpha-olefins.

5. The composite material according to any one of claims 1 to 4, **characterized in that** the melt flow index of polypropylene resin A is at most 1.8 g/10 min as measured according to the method of standard ISO 1133, condition M, at 230°C and under a load of 2.16 kg; and/ or **in that** the melt flow index of polypropylene resin B is at least 8 g/10 min as measured according to the method of standard ISO 1133, condition M, at 230 °C and under a load of 2.16 kg; preferably, at least 10 g/10 min.

6. The composite material according to any one of claims 1 to 5, **characterized in that** the polypropylene resin A is a polypropylene homopolymer and the polypropylene resin B is a polypropylene copolymer; or **in that** the polypropylene resin A is a polypropylene copolymer and the polypropylene resin B is a polypropylene copolymer wherein the content of comonomer in polypropylene resin B higher than the content of comonomer in polypropylene resin A.

7. The composite material according to any one of claims 1 to 6, **characterized in that** the melt flow index of the composite material is ranging from 1.0 g/10 min to 20.0 g/10 min as measured according to the method of standard ISO 1133, condition M, at 230 °C and under a load of 2.16 kg; preferably, from 1.5 g/10 min to 15.0 g/10 min;

preferably, from 2.0 g/10 min to 10.0 g/10 min.

**8.** The composite material according to any one of claims 1 to 7, **characterized in that** both polypropylene resins A and B are Ziegler-Natta catalyzed or **in that** polypropylene resin A is Ziegler-Natta catalyzed, and polypropylene resin B is metallocene-catalyzed.

**9.** The composite material according to any one of claims 1 to 8, **characterized in that** the melting point of polypropylene resin A is at least 160 °C as measured according to ISO 3146; and/or the melting point of polypropylene resin B is at most 155°C as measured according to ISO 3146.

**10.** The composite material according to any one of claims 1 to 9, **characterized in that** it comprises:

- from 9 wt.% to 35 wt.% of a polypropylene resin A, based on the total weight of the composite material; wherein the polypropylene resin A is a polypropylene homopolymer or a polypropylene copolymer; and
- from 39 wt.% to 65 wt.% of a polypropylene resin B, based on the total weight of the composite material; wherein the polypropylene resin B is a polypropylene homopolymer or a polypropylene copolymer.

**11.** The composite material according to any one of claims 1 to 10, **characterized in that** the polypropylene resin A and/or the polypropylene resin B is or comprises a post-consumer resin; wherein the polypropylene post-consumer resin is a blend of recycled polypropylene and recycled polyethylene, wherein the content of the recycled polyethylene is ranging from 5 to 15 wt.% relative to the total weight of the polypropylene post-consumer resin

**12.** The composite material according to any one of claims 1 to 11, **characterized in that** the carbon particles are provided in a form of a masterbatch comprising the blend of at least 5.0 wt.% of carbon particles as determined according to ISO 11358 and based on the total weight of said masterbatch; wherein the carbon particles are selected from nanographene, carbon nanotubes or any combination thereof; and a polypropylene resin C having an MI2 ranging from 100 to 260 g/10 min as determined according to ISO 1133 at 230 °C under a load of 2.16 kg.

**13.** A process for preparing a composite material according to any one of claims 1 to 12, comprising the steps of:

i) providing from 0.1 to 4.2 wt.% carbon particles, wherein the carbon particles are selected from nanographene, carbon nanotubes or any combination thereof;
ii) providing from 6 wt.% to 40 wt.% of a polypropylene resin A; wherein the polypropylene resin A is a polypropylene homopolymer or a polypropylene copolymer; wherein the melt flow index of polypropylene resin A is at most 2.0 g/10 min as measured according to the method of standard ISO 1133, condition M, at 230 °C and under a load of 2.16 kg;
iii) providing from 30 wt.% to 70 wt.% a polypropylene resin B, wherein the polypropylene resin B is a polypropylene homopolymer or a polypropylene copolymer; wherein the ratio of the melt flow index of polypropylene resin B to the melt flow index of polypropylene resin A is at least 4; and
iv) melt blending the components to form a composite material;

with preference, at least 80 wt.% of the carbon particles are carbon nanotubes have an average length of 1.2 μm or more as determined by transmission electron microscopy before being blended with a polypropylene resin; and/or the carbon particles are provided in the form of a masterbatch comprising a blend of:

- at least 5.0 wt.% of carbon particles as determined according to ISO 11358 and based on the total weight of said masterbatch; wherein the carbon particles are selected from nanographene, carbon nanotubes or any combination thereof; and
- a polypropylene resin C having an MI2 ranging from 100 to 260 g/10 min as determined according to ISO 1133 at 230 °C under a load of 2.16 kg;

**14.** An article comprising the composite material according to any one of claims 1 to 12; with preference, the article is a thermoformable article or a thermoformed article.

**15.** The article according to claim 14, **characterized in that** the article has a surface resistance of at most $5.10^6$ Ohm; preferably, of at most $1.10^6$ Ohm as measured according to IEC 61340-4-1 with an SRM110 meter.

**16.** A process for preparing an article according to any one of claims 14 to 15, comprising the steps of:

a) providing a composite material according to any one of claims 1 to 12; and/or as prepared according to claim 13;
b) forming a sheet with the composite material obtained in step a);
c) thermoforming the sheet formed in step b) into an article according to any one of claims 14 to 15.

Europäisches Patentamt
European Patent Office
Office européen des brevets

# EUROPEAN SEARCH REPORT

Application Number
EP 19 21 8380

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/044485 A1 (ROUSSEAUX DIMITRI [BE] ET AL) 15 February 2018 (2018-02-15) * claim 25; examples e2, ce2 * ----- | 1-16 | INV. C08L23/12 |
| X | KR 2015 0066264 A (LG CHEMICAL LTD [KR]) 16 June 2015 (2015-06-16) * examples 1-3 * ----- | 1-16 | |

TECHNICAL FIELDS SEARCHED (IPC)

C08L

The present search report has been drawn up for all claims

1

| Place of search | Date of completion of the search | Examiner |
|---|---|---|
| Munich | 5 March 2020 | Ritter, Nicola |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO. EP 19 21 8380

This annex lists the patent family members relating to the patent documents cited in the above-mentioned European search report. The members are as contained in the European Patent Office EDP file on
The European Patent Office is in no way liable for these particulars which are merely given for the purpose of information.

05-03-2020

| Patent document cited in search report | Publication date | Patent family member(s) | Publication date |
|---|---|---|---|
| US 2018044485 A1 | 15-02-2018 | BR 112017019417 A2 | 02-05-2018 |
| | | CA 2976850 A1 | 15-09-2016 |
| | | CN 107428952 A | 01-12-2017 |
| | | EP 3268416 A1 | 17-01-2018 |
| | | JP 2018507940 A | 22-03-2018 |
| | | KR 20170129178 A | 24-11-2017 |
| | | PH 12017501600 A1 | 12-02-2018 |
| | | SG 11201707175X A | 30-10-2017 |
| | | US 2018044485 A1 | 15-02-2018 |
| | | WO 2016142544 A1 | 15-09-2016 |
| KR 20150066264 A | 16-06-2015 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2016142544 A
- WO 03102069 A
- EP 0152701 A
- EP 0368577 A
- US 6235823 B
- WO 0246300 A
- WO 2004072168 A
- JP H8144122 B
- JP 7033895 B
- CN 1568845
- DE 3610644


### Non-patent literature cited in the description


- Plastics Additives Handbook. Hanser Publishers
- **BLOMENHOFER et al.** *Macromolecules,* 2005, vol. 38, 3688-3695